# EUROPEAN PATENT SPECIFICATION

(11) **EP 4 236 300 B1**
(45) Date of publication and mention of the grant of the patent: **28.01.2026**
(21) Application number: 21893881.9
(22) Date of filing: 16.11.2021
(51) Int. Cl.: H04N 5/783, H04N 5/77, H04N 23/60, H04N 23/63, G11B 27/00, G11B 27/031

(54) **SLOW MOTION VIDEO RECORDING METHOD AND DEVICE**
VERFAHREN UND VORRICHTUNG ZUR AUFZEICHNUNG VON VIDEOS MIT LANGSAMER BEWEGUNG
PROCÉDÉ ET DISPOSITIF D' ENREGISTREMENT VIDÉO AU RALENTI

(30) Priority: 18.11.2020 CN 202011296546
(43) Date of publication of application: 30.08.2023
(73) Proprietor: Huawei Technologies Co., Ltd., Shenzhen, Guangdong 518129 (CN)
(72) Inventor: XIAO, Bin, Shenzhen, Guangdong 518129 (CN); ZHU, Congchao, Shenzhen, Guangdong 518129 (CN); HOU, Liangjun, Shenzhen, Guangdong 518129 (CN); HU, Bin, Shenzhen, Guangdong 518129 (CN); LI, Yuanyou, Shenzhen, Guangdong 518129 (CN)
(74) Representative: Epping - Hermann - Fischer
(86) International application number: PCT/CN2021/130849
(87) International publication number: WO 2022/105734

(56) References cited:
- WO-A1-2020/073172
- CN-A- 107 666 581
- CN-A- 110 086 905
- CN-A- 110 506 415
- CN-A- 111 010 521
- US-A1- 2018 012 618
- US-A1- 2020 244 884

## Description

### TECHNICAL FIELD

This application relates to the field of electronic technologies, and in particular, to a slow-motion video recording method and a device.

### BACKGROUND

With the development of electronic technologies, an electronic device such as a mobile phone has an increasingly powerful video recording function. For example, slow-motion details of objects in high-speed motion may be captured through slow-motion video recording, to record fleeting highlight moments. In an existing slow-motion video recording solution, an electronic device determines a start time/an end time of a motion process, and generates a slow-motion video clip based on the start time/end time. The slow-motion video clip may facilitate a user to view slow-motion highlight moments at a low speed.

The start time/end time of the slow motion determined by the electronic device may be inaccurate, and a start location and an end location of the generated slow-motion video clip usually deviate from a user expectation. Therefore, it is difficult to meet a personalized requirement of the user for a slow-motion highlight moment.

CN 110 086 905 A provides a video recording method, which can be applied to an electronic device having an image sensor, including: the electronic device first turns on the camera, then displays a video preview interface, and records a video after detecting the user's recording instruction. The video frame rate of the video is greater than the original frame rate, and the original frame rate is the maximum frame rate supported by the image sensor hardware during recording. The video includes a slow motion type of video.

CN 107 666 581 A provides an electronic device. The electronic device includes a memory configured to store high-speed video captured in a first number of frames per second, and a processor electrically connected to the memory and configured to detect an image change amount based on at least one of the first number of frames, and at least a portion of the high-speed video is generated by dividing the first number of frames into a second number of frames less than the first number of frames, or a slow-motion interval in which the playback time is extended, or for at least a portion of the high-speed video. At least a portion of the frames of the number of frames are sampled to generate a slow-motion interval in which the playback time is extended.

### SUMMARY

Embodiments of this application provide a slow-motion video recording method and a device as defined in the claims, so that a user can accurately set a start location and an end location of a slow-motion video clip in a video recording process, so that the generated slow-motion video clip can accurately correspond to a slow-motion highlight moment, and can further meet a personalized requirement of the user for the slow-motion highlight moment.

According to still another claimed aspect, an embodiment of this application provides a computer-readable storage medium, including computer instructions. When the computer instructions are run on an electronic device comprising a camera (2003) and a display (2001), the electronic device is enabled to perform the video recording method according to any possible design of the foregoing aspects.

According to still another claimed aspect, an embodiment of this application provides a computer program product comprising instructions which, when the program is executed by an electronic device comprising a camera (2003) and a display (2001), the electronic device is enabled to perform the video recording method according to any possible design of the foregoing aspects.

According to still another claimed aspect, an embodiment of this application provides a chip system, and the chip system is used in an electronic device comprising a camera (2003) and a display (2001). The chip system includes one or more interface circuits and one or more processors. The interface circuit and the processor are interconnected through a line. The interface circuit is configured to receive a signal from a memory of the electronic device, and send the signal to the processor. The signal includes computer instructions stored in the memory. When the processor executes the computer instructions, the electronic device is enabled to perform the video recording method in any possible design of the foregoing aspects.

For beneficial effects corresponding to the other aspects, refer to descriptions of beneficial effects in the method aspect. Details are not described herein again.

### BRIEF DESCRIPTION OF DRAWINGS

FIG. 1 is a schematic diagram of a structure of an electronic device according to an embodiment of this application;
FIG. 2 is a schematic flowchart of a slow-motion video recording method according to an embodiment of this application;
FIG. 3A(a) to FIG. 3A(d) are a schematic diagram of a group of interfaces according to an embodiment of this application;
FIG. 3B is a schematic diagram of another group of interfaces according to an embodiment of this application;
FIG. 4 is a schematic diagram of an interface according to an embodiment of this application;
FIG. 5 is a schematic diagram of an image processing procedure according to an embodiment of this application;
FIG. 6 is a schematic diagram of another interface according to an embodiment of this application;
FIG. 7 is a schematic diagram of another image processing procedure according to an embodiment of this application;
FIG. 8 is a schematic diagram of a buffering solution according to an embodiment of this application;
FIG. 9 is a schematic diagram of a process of generating a target video according to an embodiment of this application;
FIG. 10(a) to FIG. 10(h) are a schematic diagram of another group of interfaces according to an embodiment of this application;
FIG. 11A is a schematic diagram of another group of interfaces according to an embodiment of this application;
FIG. 11B is a schematic diagram of still another group of interfaces according to an embodiment of this application;
FIG. 12(a) to FIG. 12(e) are a schematic diagram of another group of interfaces according to an embodiment of this application;
FIG. 13 is a schematic diagram of still another group of interfaces according to an embodiment of this application;
FIG. 14(a) to FIG. 14(d) are a schematic diagram of another group of interfaces according to an embodiment of this application;
FIG. 15 is a schematic diagram of another interface according to an embodiment of this application;
FIG. 16 is a schematic diagram of still another group of interfaces according to an embodiment of this application;
FIG. 17 is a schematic diagram of another interface according to an embodiment of this application;
FIG. 18 is a schematic diagram of a structure of a target video according to an embodiment of this application;
FIG. 19A is a sequence diagram of a slow-motion video recording method according to an embodiment of this application;
FIG. 19B is a schematic diagram of an effect of a video frame played on a target video according to an embodiment of this application; and
FIG. 20 is a schematic diagram of a structure of another electronic device according to an embodiment of this application.

### DESCRIPTION OF EMBODIMENTS

The following describes the technical solutions in embodiments of this application with reference to the accompanying drawings in embodiments of this application. In the descriptions of embodiments of this application, "/" represents "or" unless otherwise specified. For example, A/B may represent A or B. In this specification, "and/or" describes only an association relationship between associated objects and represents that three relationships may exist. For example, A and/or B may represent the following three cases: Only A exists, both A and B exist, and only B exists. In addition, in the descriptions in embodiments of this application, "a plurality of" means two or more.

The terms "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments, unless otherwise specified, "a plurality of" means two or more.

In embodiments of this application, the word "example", "for example", or the like is used to represent giving an example, an illustration, or a description. Any embodiment or design solution described as "example" or "for example" in embodiments of this application should not be explained as being more preferred or having more advantages than another embodiment or design solution. Exactly, use of the word "example", "for example", or the like is intended to present a relative concept in a specific manner.

Slow-motion video recording can capture a high-speed movement of an object, capture movement details that are difficult to see with naked eyes, and record fleeting highlight moments. Slow-motion video recording can also be called high-speed video recording. For example, slow-motion video recording can record a motion status of a bullet when it is ejected, an action process of a football shot, and a moment of when a water droplet splashes ripples when it falls. In an existing slow-motion video recording solution, an electronic device may automatically determine a start time/an end time of a motion process by using an algorithm such as a human body motion detection algorithm or an optical flow action detection algorithm, and automatically generate a slow-motion video clip based on the start time/end time. However, the start time/end time of the motion process automatically determined by the electronic device is often inaccurate. For example, a user wants to capture a moment at which the bullet is ejected, but a picture change amplitude is not large when the bullet is ejected, and it is difficult for the electronic device to accurately capture, by using the optical flow action detection algorithm or the like, a start time of the bullet being ejected. A start location and an end location that are of the slow-motion video clip automatically generated by the electronic device based on the start time/end time usually deviate from a user expectation. Therefore, it is difficult to meet a personalized requirement of the user for a slow-motion highlight moment.

An embodiment of this application provides a slow-motion video recording method, which may be applied to an electronic device, so that a user can accurately set a start location and an end location of a slow-motion video clip in a video recording process, so that the generated slow-motion video clip can accurately correspond to a photographed slow-motion highlight moment, and can further meet a personalized requirement of the user for the slow-motion highlight moment. The slow-motion video clip has a high video recording frame rate, and a low encoding frame rate and a low playback frame rate, so that the user can slowly and carefully watch and review a slow-motion highlight moment of an object.

For example, the electronic device may be a mobile terminal such as a mobile phone, a tablet computer, a wearable device (for example, a smartwatch), a vehicle-mounted device, an augmented reality (augmented reality, AR) device/a virtual reality (virtual reality, VR) device, a notebook computer, an ultra-mobile personal computer (ultra-mobile personal computer, UMPC), a netbook, or a personal digital assistant (personal digital assistant, PDA), or may be a device such as a professional camera. A specific type of the electronic device is not limited in embodiments of this application.

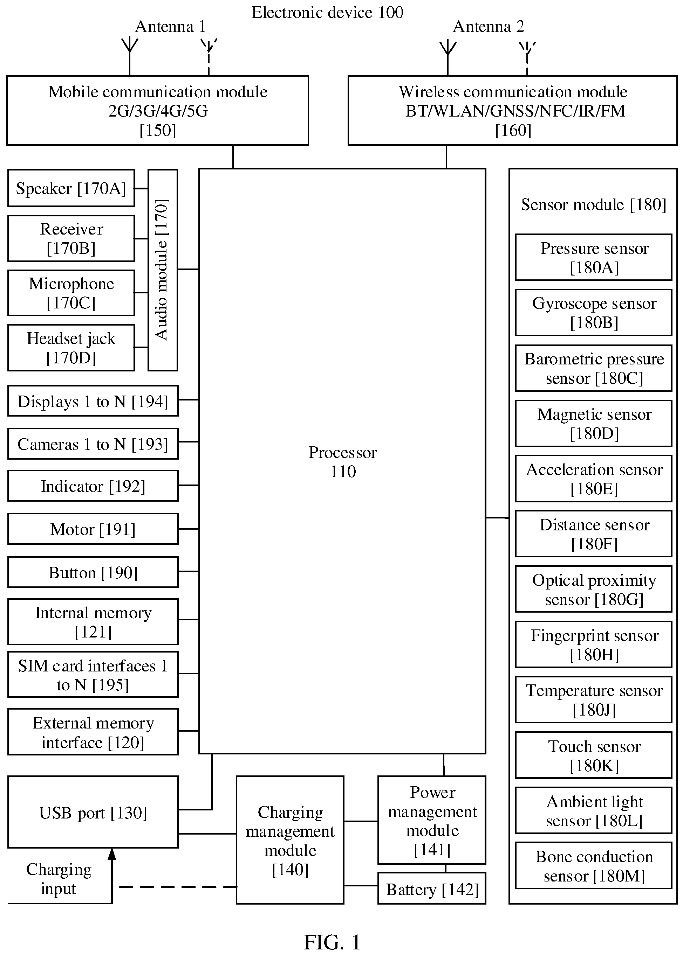

For example, FIG. 1 is a schematic diagram of a structure of an electronic device 100. The electronic device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

In this embodiment of this application, the display 194 may be configured to display interface content such as a preview interface and an image shooting interface in a slow-motion video recording scenario. The display 194 is further configured to display, on the image shooting interface, a high-frame-rate image frame buffered in a slow-motion video recording process, so that the user can select a start location and an end location of a slow-motion video clip.

The electronic device 100 may implement an image shooting function through the ISP, the camera 193, the video codec, the GPU, the display 194, the application processor, and the like.

The ISP is configured to process data fed back by the camera 193. For example, during image shooting, a shutter is pressed, and light is transferred to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of an image shooting scenario. In some embodiments, the ISP may be disposed in the camera 193. The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV In some embodiments, the electronic device 100 may include one or N cameras 193, where N is a positive integer greater than 1.

In this embodiment of this application, the camera 193 may include one or more of the following cameras: a long-focus camera, a wide-angle camera, an ultra-wide-angle camera, a zoom camera, a depth camera, or the like. The long-focus camera has a small image shooting range, and is applicable to shooting a distant scene. An image shooting range of the wide-angle camera is large. The ultra-wide-angle camera has an image shooting range larger than that of the wide-angle camera, and is applicable to shooting a scene with a large picture such as a panorama. The depth camera may be configured to measure an object distance of a to-be-photographed object, that is, measure depth information of the to-be-photographed object. For example, the depth camera may include a three-dimensional (3-dimensional, 3D) depth camera, a time of flight (time of flight, TOF) depth camera, a dual-lens depth camera, or the like. The camera 193 may include a front-facing camera and/or a rear-facing camera.

In this embodiment of this application, the camera 193 may be configured to capture an image in the slow-motion video recording scenario.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 may play back or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a structure of a biological neural network, for example, a transfer mode between human brain neurons, and may further continuously perform self-learning. Applications such as intelligent cognition of the electronic device 100 may be implemented through the NPU, for example, image recognition, facial recognition, speech recognition, and text understanding.

The internal memory 121 may be configured to store computer-executable program code, and the executable program code includes instructions. The processor 110 runs the instructions stored in the internal memory 121, to perform various function applications of the electronic device 100 and data processing. The internal memory 121 may include a program storage region and a data storage region. The program storage region may store an operating system, an application required by at least one function (for example, a voice playing function or an image playing function), and the like. The data storage region may store data (such as audio data and an address book) created during use of the electronic device 100, and the like. In addition, the internal memory 121 may include a high-speed random access memory, or may include a nonvolatile memory, for example, at least one magnetic disk storage device, a flash memory, a universal flash storage (universal flash storage, UFS), or a double data rate synchronous dynamic random access memory (double data rate synchronous dynamic random access memory, DDR SDRAM).

In this embodiment of this application, the internal memory 121 may be configured to buffer a high-frame-rate image frame within preset duration in the slow-motion video recording process. The processor 110 generates, in the slow-motion video recording process by running the instructions stored in the internal memory 121, the slow-motion video clip based on the start location and the end location that are accurately set by the user, to meet the personalized requirement of the user for the slow-motion highlight moment.

The electronic device 100 can implement an audio function such as music playing or recording through the audio module 170, the speaker 170A, the receiver 170B, the microphone 170C, the headset jack 170D, the application processor, and the like.

The touch sensor 180K is also referred to as a "touch panel". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of the touch event. The display 194 may provide a visual output related to the touch operation. In some other embodiments, the touch sensor 180K may also be disposed on a surface of the electronic device 100 at a location different from that of the display 194.

It may be understood that the structure shown in this embodiment of this application constitutes no specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

In this embodiment of this application, the camera 193 may be configured to capture the image in the slow-motion video recording scenario. The internal memory 121 may be configured to buffer the high-frame-rate image frame within the preset duration in the slow-motion video recording process. The display 194 may be configured to display the preview interface or the image shooting interface in the slow-motion video recording scenario, and may be further configured to display, on the image shooting interface, the high-frame-rate image frame buffered in the slow-motion video recording process, so that the user can select the start location and the end location of the slow-motion video clip from the high-frame-rate image frame. The processor 110 runs the instructions stored in the internal memory 121, so that in the video recording process, the user accurately sets the start location and the end location of the slow-motion video clip, to meet the personalized requirement of the user for the slow-motion highlight moment.

The following describes the slow-motion video recording method provided in this embodiment of this application by using an example in which the electronic device is a mobile phone having the structure shown in FIG. 1.

In the slow-motion video recording method provided in this embodiment of this application, the mobile phone may first enable a video recording function. Then, after detecting a video recording operation of the user, the mobile phone displays candidate image frames on a frame selection interface if detecting slow-motion triggering, where the candidate image frames include a plurality of frames of images. Then, the mobile phone may obtain a start frame and an end frame that are set by the user based on the candidate image frames. Then, the mobile phone may generate a target video, where the target video includes a slow-motion video clip, the slow-motion video clip corresponds to the start frame and the end frame, and a video recording frame rate of the slow-motion video clip is higher than an encoding frame rate of the slow-motion video clip.

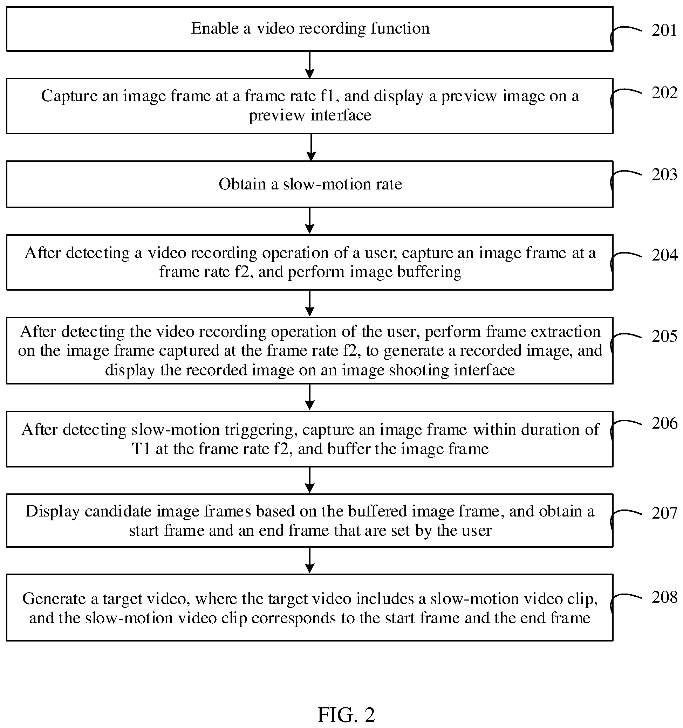

An embodiment of this application further provides another slow-motion video recording method. Refer to FIG. 2. The method includes the following steps.

201: A mobile phone enables a video recording function.

In this embodiment of this application, when a user wants to perform slow-motion video recording, the user may enable the video recording function of the mobile phone.

In some embodiments, the mobile phone may have a plurality of video recording functions. When the user wants to perform slow-motion video recording, the mobile phone may enable a slow-motion video recording function.

For example, the mobile phone may open a camera application, or open another application with an image shooting function or a video recording function (for example, an AR application such as TikTok or Hetu cyberverse), and then enable a slow-motion video recording function of the application.

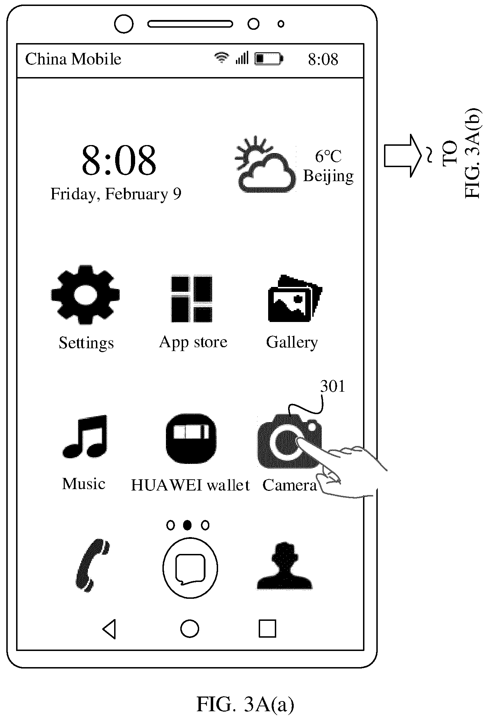

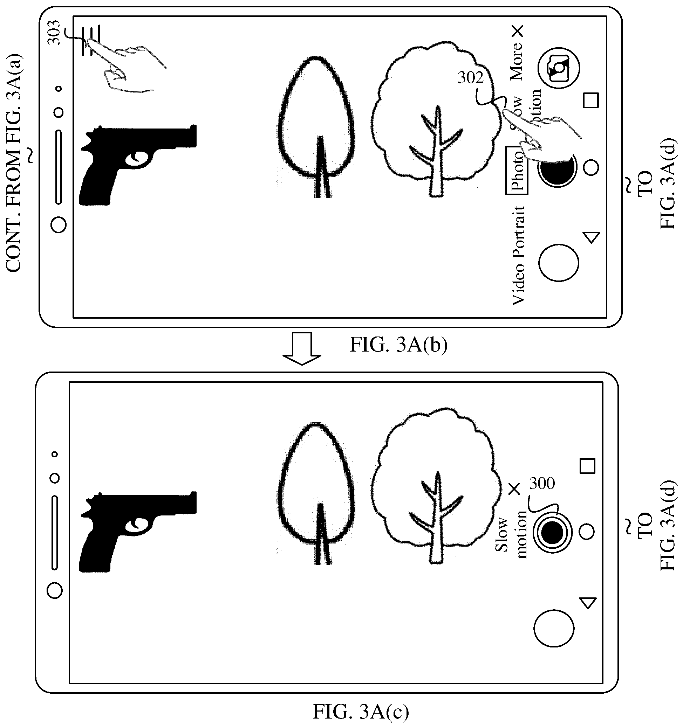

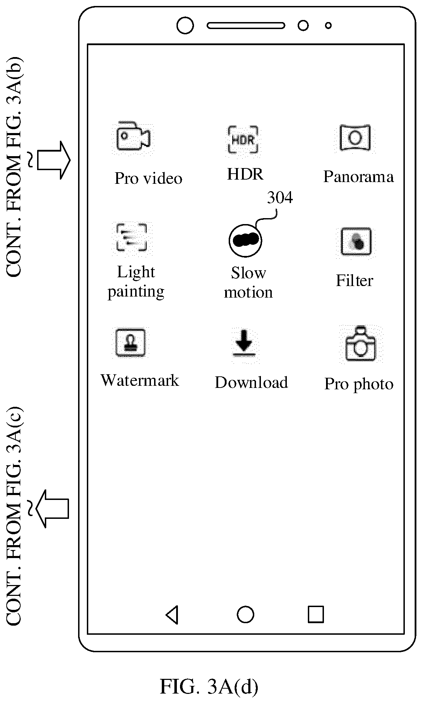

For example, after detecting an operation of tapping an icon 301 of a camera application in FIG. 3A(a) by the user, the mobile phone enables an image shooting function, and displays a preview interface shown in FIG. 3A(b). After detecting an operation of tapping a control 302 in FIG. 3A(b) by the user, as shown in FIG. 3A(c), the mobile phone enables a slow-motion video recording function.

For another example, after detecting an operation of tapping a control 303 in FIG. 3A(b) by the user, the mobile phone displays an interface shown in FIG. 3A(d). After detecting an operation of tapping a control 304 by the user, as shown in FIG. 3A(c), the mobile phone enables a slow-motion video recording function.

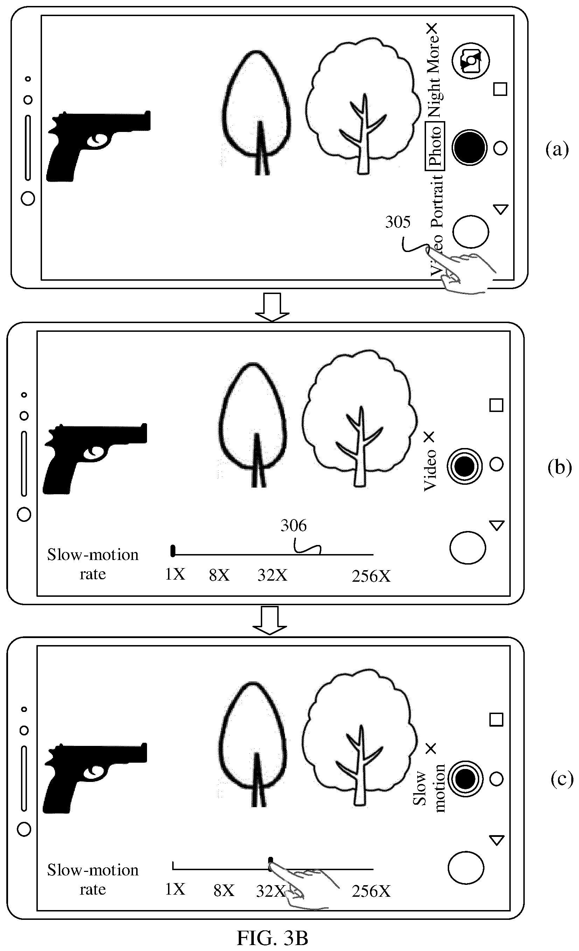

For another example, refer to FIG. 3B. After detecting an operation of tapping a control 305 in (a) in FIG. 3Bby the user, the mobile phone enters a common video recording mode shown in (b) in FIG. 3B. A preview interface in the common video recording mode includes a slow-motion rate control 306. When the user selects a slow-motion rate greater than 1X, the mobile phone enables a slow-motion video recording function. For example, as shown in (c) in FIG. 3B, after detecting that the user selects a slow-motion rate of 32X by using the slow-motion rate control 306, the mobile phone enables the slow-motion video recording function. A slow-motion rate kX indicates that a video recording frame rate of a slow-motion video clip is k times a preset reference video recording frame rate, and k is a positive integer. For example, the reference video recording frame rate may be a video recording frame rate commonly used in the common video recording mode, for example, 30 fps or 25 fps. The video recording frame rate of the slow-motion video clip is an encoding frame rate of the slow-motion video clip.

For another example, when displaying a home screen or another non-camera application interface, the mobile phone enables a slow-motion video recording function after detecting a voice instruction of entering a slow-motion video recording mode from the user.

It should be noted that the mobile phone may alternatively enable the slow-motion video recording function in response to another touch operation, a voice instruction, or a shortcut gesture of the user. A specific operation of triggering the mobile phone to enable the slow-motion video recording function is not limited in embodiments of this application.

In some embodiments, after enabling the slow-motion video recording function, the mobile phone records a target video by using a slow-motion video recording method provided in the following embodiment. The target video includes a slow-motion video clip, and the slow-motion video clip is used to record a slow-motion highlight moment.

In some other embodiments, the mobile phone records a target video by using a slow-motion video recording method provided in the following embodiment only when the slow-motion video recording function is enabled and the slow-motion rate set by the user is greater than or equal to a preset rate 1. For example, the preset rate 1 is 8X, and the mobile phone records the target video by using the slow-motion video recording method provided in the following embodiment only when determining that the slow-motion rate set by the user is greater than or equal to 8X.

In some other embodiments, after enabling the slow-motion video recording function, the mobile phone may enter the slow-motion video recording mode, so that the mobile phone records a target video in the slow-motion video recording mode by using a slow-motion video recording method provided in the following embodiment.

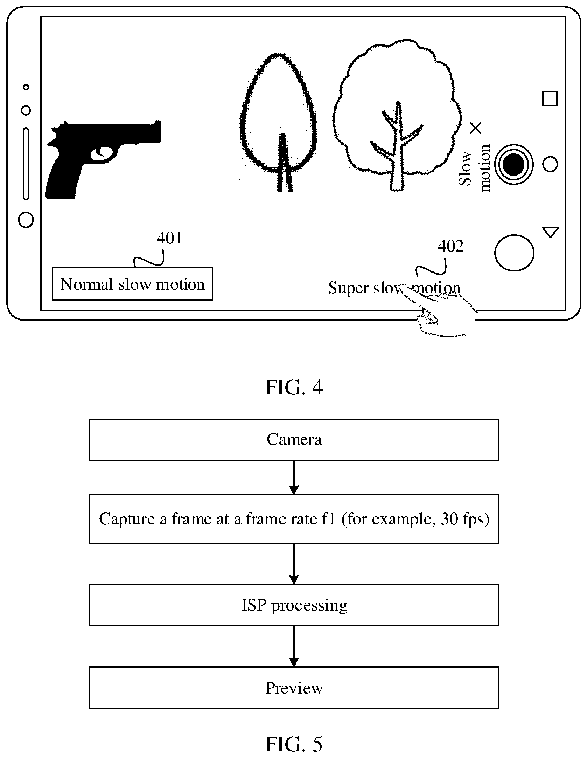

In some other embodiments, after the mobile phone enables the slow-motion video recording function, there may be a plurality of slow-motion video recording submodes, and the mobile phone records a target video in only a specific submode by using a slow-motion video recording method provided in the following embodiment. For example, refer to FIG. 4. The preview interface of the mobile phone includes a common slow-motion control 401 and a super slow-motion control 402. After detecting an operation of tapping the super slow-motion control 402 by the user, the mobile phone enters a super slow-motion submode, and records the target video by using the slow-motion video recording method provided in the following embodiment.

202: The mobile phone captures an image frame at a frame rate f1, and displays a preview image on the preview interface.

After enabling the slow-motion video recording function, the mobile phone may capture the image frame at the frame rate f1 in a preview state, obtain the preview image based on the image frame, and display the preview image on the preview interface at the frame rate f1. The preview image may be generated after ISP processing is performed on the image frame captured by a camera. For example, an ISP processing operation may include a processing operation such as conversion from a RAW image of an image frame to an RGB image, automatic white balance (automatic white balance, AWB), defect pixel cluster correction, noise reduction pre-filtering, chromatic aberration correction, or chroma noise reduction.

The frame rate f1 is low, for example, may be a preview and video recording frame rate commonly used in the common video recording mode, for example, 30 fps or 25 fps. In a possible implementation solution, the frame rate f1 is equal to the foregoing reference video recording frame rate.

In some embodiments, refer to FIG. 5. The process shown in step 202 may include: The camera captures the image frame at the frame rate f1 (for example, 30 fps) (that is, generates a frame at the frame rate f1), performs frame-by-frame processing on the captured image frame by using an ISP, and then generates the preview image and displays the preview image on the preview interface.

In some embodiments, after step 201, the method may further include step 203.

203: The mobile phone obtains the slow-motion rate.

The slow-motion rate indicates a multiple of the video recording frame rate of the slow-motion video clip (which is referred to as a video recording frame rate corresponding to the slow-motion rate below) relative to the preset reference video recording frame rate, and for example, may be 32X, 64X, or 256X, which respectively represent 32 times, 64 times, or 256 times of the preset reference video recording frame rate. The video recording frame rate corresponding to the slow-motion rate is used to encode, after video recording starts, a target image frame between a start location and an end location that are of a slow motion and that are set by the user, so as to generate the slow-motion video clip in the target video. The image frame in the slow-motion video clip has a high video recording frame rate, a low encoding frame rate, and a low playback frame rate, so that the user can watch the slow-motion highlight moment slowly and carefully for a long time. That is, the slow-motion video clip is used to record the slow-motion highlight moment.

In some embodiments, the slow-motion rate is a default rate, or a rate used in a previous slow-motion video recording process.

In some other embodiments, the slow-motion rate is automatically determined by the mobile phone based on an image shooting scenario. For example, in an image shooting scenario in which an object moves at a high speed (for example, an image shooting scenario such as rocket launching or bullet ejecting), the slow-motion rate may be high (for example, 256X or 128X), so that the video recording frame rate of the slow-motion video clip is high, and there are a large quantity of image frames used to generate the slow-motion video clip. In this way, the user can watch the slow-motion highlight moment slowly and carefully for a long time by using more video frames. Correspondingly, in an image shooting scenario in which an object moves at a low speed (for example, an image shooting scenario in which a water droplet falls or jumps), the slow-motion rate may be low (for example, 64X or 32X).

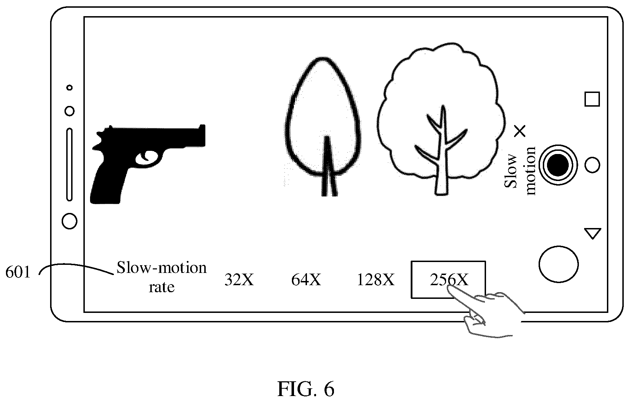

In some other embodiments, the slow-motion rate is a rate set by the user. For example, refer to FIG. 6. After enabling the slow-motion video recording function, the mobile phone displays a plurality of slow-motion rate controls 601 on the preview interface. The mobile phone determines, based on the slow-motion rate control selected by the user, the slow-motion rate set by the user.

For another example, as shown in FIG. 3A(b) and FIG. 3A(c), the slow-motion rate may be a rate that is set when the user enables the slow-motion video recording function.

For another example, the mobile phone may obtain, based on a voice instruction of the user, the slow-motion rate set by the user.

It may be understood that there may be a plurality of manners for setting the slow-motion rate. The manner is not specifically limited in embodiments of this application.

It may be further understood that the mobile phone may further modify the slow-motion rate in response to an operation of the user.

It should be noted that in some embodiments of this application, step 203 is an optional step.

204: After detecting a video recording operation of the user, the mobile phone captures an image frame at a frame rate f2, and performs image buffering.

When the user wants to start video recording, the user can trigger the video recording operation to enable the mobile phone to enter a video recording process. For example, after detecting an operation of tapping an image shooting control 300 on the preview interface in FIG. 3A(c) by the user, the mobile phone determines that the video recording operation of the user is detected, and enters the video recording process. For another example, after detecting an operation of starting video recording as indicated by a voice of the user, the mobile phone determines that the video recording operation of the user is detected, and enters the video recording process.

It may be understood that a manner for triggering the mobile phone to enter the video recording process may alternatively include a plurality of other manners such as a gesture. This manner is not specifically limited in embodiments of this application.

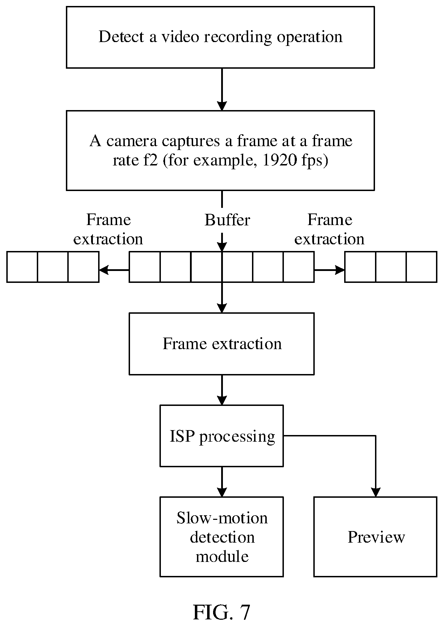

Refer to FIG. 7. After detecting the video recording operation of the user, the mobile phone may capture the image frame at the frame rate f2 by using the camera. The frame rate f2 may be high. In some embodiments, the frame rate f2 is greater than the frame rate f1, that is, an image capture frame rate of the mobile phone in the preview state is low, and an image capture frame rate in the video recording process is high. For example, the frame rate f1 may be 30 fps, and the frame rate f2 may be 1920 fps, 960 fps, 240 fps, or the like.

In some embodiments, f2 may be a default frame rate, a frame rate set by the user, or a maximum frame rate that can be supported by the ISP (namely, a maximum frame rate at which the ISP can perform real-time image processing).

In some other embodiments, the frame rate f2 may be related to the slow-motion rate when the slow-motion rate is obtained in step 203. When the slow-motion rate is less than a preset rate 2, the frame rate f2 is a video recording frame rate corresponding to the slow-motion rate. When the slow-motion rate is greater than or equal to the preset rate 2, the frame rate f2 is a frame rate corresponding to the preset rate 2.

In some technical solutions, the frame rate corresponding to the preset rate 2 is the maximum frame rate that can be supported by the ISP. For example, if the maximum frame rate that can be supported by the ISP is 1920 fps and the reference video recording frame rate is 30 fps, the preset rate 2 is: 1920 fps/30 fps = 64X. That is, when the slow-motion rate is less than or equal to 64X, f2 is a video recording frame rate corresponding to the slow-motion rate, that is, the slow-motion rate x the reference video recording frame rate. For example, when the slow-motion rate is 8X, the frame rate f2 is: 8 x 30 fps = 240 fps. When the slow-motion rate is 32X, the frame rate f2 is: 32 x 30 fps = 960 fps. When the slow-motion rate is greater than or equal to 64X, the frame rate f2 is the maximum frame rate that can be supported by the ISP, namely, 1920 fps.

As shown in FIG. 7, after detecting the video recording operation of the user, the mobile phone may perform image buffering based on the image frame captured at the frame rate f2. Because the frame rate f2 is high, the ISP may not be able to perform frame-by-frame processing in real time. Therefore, the mobile phone may first buffer an image frame whose frame rate is f2, so that the ISP can process an involved image frame during subsequent use.

For example, after detecting the video recording operation of the user, the mobile phone may first buffer, in real time, image frames captured at the high frame rate f2 until buffering duration is equal to T0. After the buffering duration is longer than T0, the mobile phone buffers, in real time, image frames captured at the high frame rate f2 within the duration of TO between a current moment t0 and a previous moment t1, to generate, after slow-motion triggering is detected, a slow-motion video clip based on the buffered image frames captured at the frame rate f2 within the latest duration of TO. The image frames that ate captured at the frame rate f2 within the latest duration of TO and that are buffered by the mobile phone may be referred to as a first image frame set. However, for an image frame buffered before the duration of TO in the video recording process, because the image frame is not subsequently used to generate the slow-motion video clip, the mobile phone may buffer an image frame that is obtained through frame extraction and whose frame rate is f3.

The duration of TO is short, for example, may be 0.5s, 1s, or 1.5s, f3 is small, for example, may be 25 fps or 30 fps, and f3 and f1 may be equal or not equal. In this way, after video recording starts, the mobile phone only needs to buffer the image frames at the high frame rate f2 within the short duration of T0 in the video recording process and the image frames that are at the low frame rate f3 and that are obtained through frame extraction before the duration of TO in the video recording process, instead of buffering all image frames at the high frame rate f2 that are captured in the entire video recording process. Therefore, an amount of data buffered by the mobile phone in real time in the video recording process can be reduced, and a requirement for a buffering capability of the mobile phone in the video recording process can be reduced.

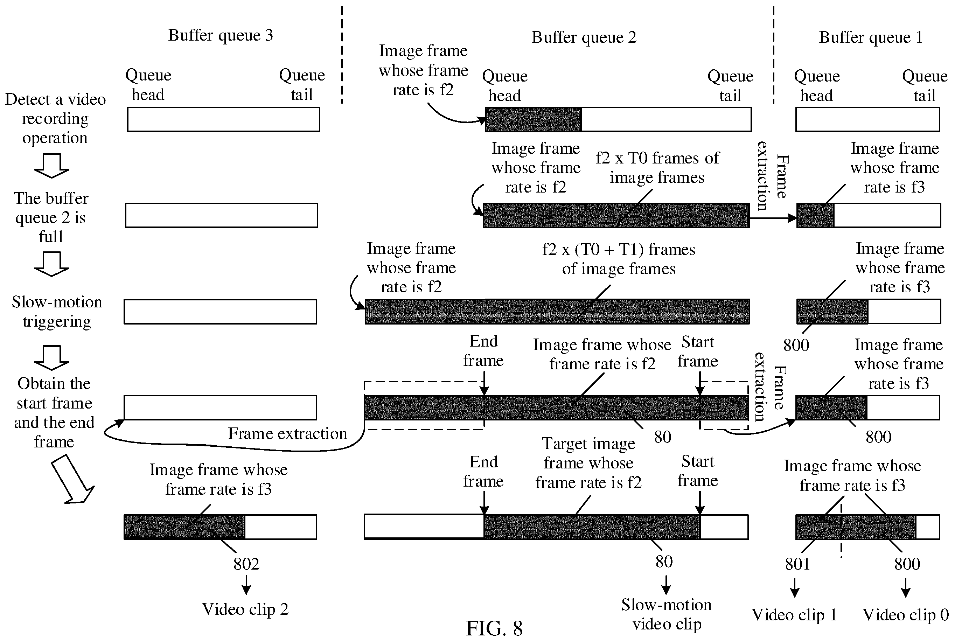

In a possible implementation solution, after detecting the video recording operation of the user, the mobile phone may initialize three DDR buffer queues shown in FIG. 8: a buffer queue 1, a buffer queue 2, and a buffer queue 3. A length of the buffer queue 2 is f2 x TO. After video recording starts, the camera captures the image frames at the frame rate f2 (for example, 1920 fps). The latest image frame captured by the camera is placed into a queue head of the buffer queue 2. If the buffer queue 2 is full, that is, f2 x TO frames of images are buffered in the buffer queue 2, the mobile phone performs frame extraction on an image frame at a queue tail of the buffer queue 2 to form a standard-speed image frame whose frame rate is f3, and then moves the standard-speed image frame to a queue head of the buffer queue 1.

205: After detecting the video recording operation of the user, the mobile phone performs frame extraction on the image frames captured at the frame rate f2, to generate a recorded image, and displays the recorded image on an image shooting interface.

After detecting the video recording operation of the user, as shown in FIG. 7, the mobile phone performs frame extraction on the image frames captured at the frame rate f2 to obtain the image frames whose frame rate are f3, performs ISP processing on the image frames whose frame rate are f3 to generate a recorded image, and displays the recorded image on the image shooting interface. In addition, refer to FIG. 7. The image frame processed by the ISP may be further sent to a slow-motion detection module to detect whether a slow motion is triggered.

In some embodiments, based on the buffering solution shown in FIG. 8, frame extraction may be performed on the image frames whose frame rate are f2 buffered in the buffer queue 2 to form the image frames whose frame rate are f3, and then the image frames whose frame rate are f3 may be sent to the ISP for processing, to generate the recorded image for preview.

In this way, after video recording starts, although the mobile phone captures the image frames at the high frame rate f2, the mobile phone performs ISP processing on and displays only the image frames at the low frame rate f3 obtained through frame extraction. Therefore, a calculation amount of image processing can be reduced, and a requirement for a real-time computing capability of the mobile phone in the video recording process can be reduced.

206: After detecting slow-motion triggering, the mobile phone captures image frames within duration of T1 at the frame rate f2, and buffers the image frames.

After detecting slow-motion triggering, the mobile phone may determine that a photographed object is currently in a motion process, so that a slow-motion video clip may be generated based on an image frames in the motion process. Slow-motion triggering may be automatically triggered by the mobile phone, or may be actively triggered by the user. For example, an automatic triggering algorithm used by the mobile phone may include a human body action detection algorithm, an optical flow action detection algorithm, or the like.

The human body action detection algorithm may detect a motion action of a photographed human body. If the mobile phone detects the motion action of the photographed human body, slow-motion processing may be performed on a continuous process of the motion action, to generate a slow-motion video clip.

For example, for a correspondence between the motion action and a detection condition, refer to Table 1. After meeting the detection condition, the mobile phone determines that the motion action of the human body is detected, to determine that the slow motion is triggered.

**Table 1**

| Motion action | Detection condition |
|---|---|
| Jump | Jump up in situ, with an obvious squat take-off process |
| Set shot | Hold a basketball in both hands and raise it high, ready to aim for the shot |
| One-handed wave | Swing an arm left and right at neck height and above |
| Running | There are obvious arm swings and leg lifts, with a specific running speed |
| Lifting a foot and getting ready to shoot | Different from kicking when walking and dribbling, a range is larger, the leg and the foot are pulled back |
| Turnaround | A single turn or a plurality of consecutive turns at a specific rotation speed, with hand raised or lifted and swung naturally |
| Swinging | Raise a hand with a great amplitude, which is different from an ordinary action of swinging a hand |
| Split-leg jump | Different from an ordinary jump, an upward jump requires a split action, with legs spreading to both sides |
| Playing golf | Swing with both hands vigorously to hit a ball |
| Playing ping-pong | Swing vigorously to hit a ball, with a specific amplitude |
| Layup | Jump, and perform one-handed layup |
| Cheering | Raise and wave hands, and jump slightly |
| Applause | Hands applaud in front of the chest, and arms may open |
| Skateboard | When performing Ollie, the skateboard is off the ground or feet is off the skateboard |

The optical flow action detection algorithm may detect whether the photographed object moves by detecting an intensity of a picture change between adjacent image frames. If the mobile phone detects that the photographed object moves, slow-motion processing is performed in the motion process to generate a slow-motion video clip. Therefore, it may be determined that the slow motion is triggered.

It may be understood that there may be a plurality of manners in which the user actively triggers the slow motion. The triggering manner is not specifically limited in embodiments of this application. For example, a slow-motion trigger control is displayed on the image shooting interface. After detecting an operation of tapping the control by the user, the mobile phone determines that the slow motion is triggered. For another example, after detecting a user voice instruction for slow-motion triggering, the mobile phone determines that the slow motion is triggered.

It can be learned from the description in step 204 that, after detecting the video recording operation, the mobile phone buffers, in real time in the video recording process, image frames captured at the frame rate f2 within the duration of TO between the current moment t0 and the previous moment t1, and image frames whose frame rate are f3 after frame extraction is performed on image frames captured at the frame rate f2 before the moment t1. Therefore, when detecting slow-motion triggering, the mobile phone has buffered the image frames captured at the frame rate f2 within the duration of TO between the current moment t0 and the previous moment t1, and the image frames whose frame rate are f3 after frame extraction is performed on the image frames captured at the frame rate f2 before the moment t1. That is, the mobile phone buffers the image frames that are captured at the frame rate f2 within the duration of T0 before slow-motion triggering is detected. Because a process in which the mobile phone detects slow-motion triggering takes a specific period of time, after the mobile phone detects slow-motion triggering, the slow motion may have lasted for a period of time, and therefore, the mobile phone may record the slow-motion process as completely as possible by buffering the image frame that is captured at the frame rate f2 within the duration of TO before slow-motion triggering is detected.

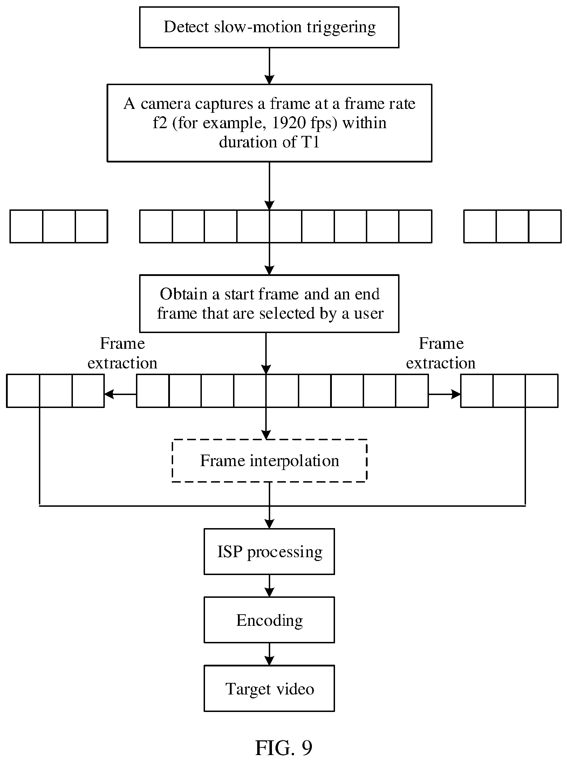

In addition, after the mobile phone detects slow-motion triggering, the slow-motion process may not be completed. Therefore, as shown in FIG. 9, the mobile phone may continue to capture image frames at the frame rate f2 within the subsequent duration of T1, and buffer the image frames, so as to record the entire slow-motion process as completely as possible. The buffered image frames whose frame rate are f2 within the duration of T1 after slow-motion triggering is detected may be referred to as a second image frame set.

In this embodiment of this application, the image frames that are captured at the frame rate f2 within the duration of TO before slow-motion triggering is detected and the image frames whose frame rate are f2 within the duration of T1 after slow-motion triggering is detected, which are buffered by the mobile phone, are used to generate a slow-motion video clip.

In some embodiments, based on the buffer solution shown in FIG. 8, after detecting slow-motion triggering, the mobile phone may extend the length of the buffer queue 2 to f2 x (T0 + T1). The mobile phone places the latest image frame that is captured at the frame rate f2 by using the camera after detecting slow-motion triggering into the queue head of the buffer queue 2, and stops capturing an image frame until the buffer queue 2 is full.

In some embodiments, time lengths of T0 and T1 are preset by the mobile phone.

In some other embodiments, the time lengths of T0 and T1 may be set by the user. For example, the user may set values of T0 and T1 based on the image shooting scenario.

In some other embodiments, the time lengths of T0 and T1 are automatically determined by the mobile phone based on the image shooting scenario. For example, if duration of a motion process in the image shooting scenario is long (for example, the image shooting scenario in which the water droplet falls), T0 and T1 may be long, so that the mobile phone can buffer more image frames whose frame rate is f2. In this way, a large quantity of image frames may be included between a start frame and an end frame that are selected by the user, so that there are a large quantity of video frames in the slow-motion video clip generated based on the image frames between the start frame and the end frame. This enables the user to watch the slow-motion highlight moment slowly and carefully by using more video frames in the slow-motion video clip. Correspondingly, if the duration of the motion process in the image shooting scenario is short (for example, the image shooting scenario of bullet ejecting), T0 and T1 may be short.

207: The mobile phone displays candidate image frames based on the buffered image frame, and obtains the start frame and the end frame that are set by the user.

After detecting slow-motion triggering, the mobile phone may display the candidate image frames on a frame selection interface based on image frames in the first image frame set and the second image frame set, so as to obtain, as shown in FIG. 9, the start frame and the end frame that are selected by the user based on the candidate image frames. An image frame whose frame rate is f2 between the start frame and the end frame may be a target image frame or is used to generate a target image frame. The target image frame is used to generate the slow-motion video clip in the target video that is finally obtained by image shooting. The slow-motion video clip is used to record a slow-motion highlight moment that the user wants.

There may be a plurality of manners in which the mobile phone displays the candidate image frames on the frame selection interface. The display manner is not specifically limited in embodiments of this application.

For example, in some embodiments, the candidate image frames are image frames in the first image frame set and the second image frame set, so that the user selects the start frame and the end frame from the image frames.

In some other embodiments, there are a large quantity of image frames whose frame rate is f2 in the first image frame set and the second image frame set, and a difference between adjacent image frames is small. Therefore, it is inconvenient for the user to select the start frame and the end frame. Therefore, the mobile phone may perform frame extraction on the image frames in the first image frame set and the second image frame set to obtain the candidate image frames. Then, the mobile phone displays the candidate image frames on the frame selection interface, so that the user can quickly select the start frame and the end frame based on a small quantity of image frames with a large difference.

In some embodiments, a quantity of candidate image frames varies with different slow-motion rates. For example, a higher slow-motion rate indicates that a motion speed of a motion process that the user wants to shoot may be higher, and the difference between the adjacent image frames may be larger. Therefore, the quantity of candidate image frames may be larger, so that the user precisely selects the start frame and the end frame corresponding to the high-speed motion process based on the large quantity of candidate image frames. Correspondingly, a lower slow-motion rate indicates a smaller quantity of candidate image frames. That is, the quantity of candidate image frames is positively correlated with the slow-motion rate. For example, if the slow-motion rate is 32X, the candidate image frames may be 30 frames. If the slow-motion rate is 64X, the candidate image frames may be 60 frames.

In some other embodiments, if the slow-motion rates are different, frame extraction intervals at which the mobile phone performs frame extraction on the buffered image frames in the first image frame set and the second image frame set to obtain the candidate image frames are also different. For example, a higher slow-motion rate indicates that there are usually more image frames in the first image frame set and the second image frame set, and the frame extraction interval may also be correspondingly larger, so that the user obtains a smaller quantity of image frames with larger differences based on the larger frame extraction interval, so as to quickly select the start frame and the end frame. Correspondingly, a lower slow-motion rate indicates a smaller frame extraction interval. For example, if the slow-motion rate is 32X, the frame extraction interval may be 16 frames. If the slow-motion rate is 64X, the frame extraction interval may be 32 frames. That is, the frame extraction interval used to obtain the candidate image frames is positively related to the slow-motion rate.

In some other embodiments, the user may set the quantity of candidate image frames or the frame extraction interval. For example, the mobile phone may display a plurality of frame quantity controls/frame extraction interval controls of the candidate image frames on the frame selection interface, so that the user selects the quantity of candidate image frames/the frame extraction interval. In some technical solutions, a higher slow-motion rate indicates a larger quantity of image frames corresponding to the frame quantity control displayed by the mobile phone. For example, if the slow-motion rate is 32X, the frame quantity control displayed on the frame selection interface of the mobile phone includes: a 15-frame control, a 30-frame control, and a 45-frame control. If the slow-motion rate is 64X, the frame quantity control displayed on the frame selection interface of the mobile phone includes: a 30-frame control, a 60-frame control, and a 90-frame control. In some other technical solutions, a higher slow-motion rate indicates a larger frame extraction interval corresponding to the frame extraction interval control displayed on the frame selection interface by the mobile phone.

In some other embodiments, because a display area of an interface of the mobile phone is limited, and a quantity of image frames that can be displayed is limited, the mobile phone may first perform frame extraction on the image frames in the first image frame set and the second image frame set at a large frame extraction interval to obtain candidate image frames, and display the candidate image frames on the frame selection interface, so that the user first selects a reference start frame and a reference end frame at a coarse granularity. Then, the mobile phone may further perform frame extraction on the image frames in the first image frame set and the second image frame set at a small frame extraction interval to obtain the reference start frame and a nearby candidate image frame (which may be referred to as a third image frame set), and the reference end frame and a nearby candidate image frame (which may be referred to as a fourth image frame set). The mobile phone displays the third image frame set and the fourth image frame set on the frame selection interface, so that the user precisely selects the start frame and the end frame at a fine granularity.

In some other embodiments, to facilitate the user to select the start frame and the end frame, the mobile phone may display, on the frame selection interface, a recommended start frame and a recommended end frame that are automatically determined by using an algorithm, or identify the recommended start frame and the recommended end frame in the candidate image frames. The start frame and the end frame that the user wants to select are usually near the recommended start frame and the recommended end frame. In this way, the mobile phone prompts the user of the recommended start frame and the recommended end frame on the frame selection interface, so that the user can precisely select the start frame near the recommended start frame and precisely select the end frame near the recommended end frame.

In some other embodiments, to facilitate the user to select the start frame and the end frame, the mobile phone may display, on the frame selection interface, a recommended start frame range and a recommended end frame range that are automatically determined by using an algorithm, or identify the recommended start frame range and the recommended end frame range in the candidate image frames. The start frame and end frame that the user wants to select are usually within or near the recommended start frame range and the recommended end frame range. In this way, the mobile phone prompts the user of the recommended start frame range and the recommended end frame range on the frame selection interface, so that the user can precisely select the start frame in or near the recommended start frame range and precisely select the end frame in or near the recommended end frame range.

In some embodiments, because a display area of the frame selection interface is limited, the candidate image frames may be displayed in a form of thumbnails, so that thumbnails of a plurality of image frames may be simultaneously displayed on the interface, so as to facilitate selection by the user. The thumbnails of the candidate image frames may be displayed at any location of the frame selection interface, for example, arranged horizontally at a bottom of the frame selection interface, or arranged vertically at a right side of the frame selection interface. Only thumbnails of some candidate image frames may be displayed on the interface at the same time, and thumbnails of all candidate image frames cannot be displayed at the same time. The mobile phone may display a thumbnail of another candidate image frame through sliding on the frame selection interface in response to a sliding operation of the user.

In addition, there may also be a plurality of manners in which the user selects the start frame and the end frame based on the candidate image frames. This manner is not specifically limited in embodiments of this application.

In addition, for a recorded image, in some embodiments, after detecting slow-motion triggering, the mobile phone performs processing such as frame extraction on a subsequently captured image frame whose frame rate is f2, to generate a recorded image whose frame rate is f3. The recorded image is displayed on the background of the frame selection interface in real time at the frame rate f3, and a thumbnail of a candidate image frame is displayed on the foreground of the frame selection interface.

In some other embodiments, after detecting slow-motion triggering, the mobile phone continuously displays the currently displayed recorded image on the background of the frame selection interface, does not refresh the recorded image displayed on the background, and displays the thumbnails of the candidate image frames on the foreground of the frame selection interface.

In some other embodiments, after detecting slow-motion triggering, the mobile phone no longer displays the recorded image on the frame selection interface, but displays only the thumbnails of the candidate image frames on the frame selection interface.

In some embodiments, after detecting slow-motion triggering, the mobile phone displays an image shooting control on the frame selection interface, and a status of the image shooting control is consistent with that of the image shooting control on the preview interface.

In some embodiments, after detecting slow-motion triggering, the mobile phone does not display the image shooting control on the frame selection interface.

In some other embodiments, in a process in which the mobile phone displays the recorded image on the frame selection interface, the mobile phone continues to display the image shooting control on the frame selection interface. After the mobile phone stops capturing an image, the mobile phone no longer displays the image shooting control on the frame selection screen. Alternatively, the mobile phone displays the image shooting control on the frame selection interface, and the status of the image shooting control is consistent with that of the image shooting control on the preview interface.

A specific manner in which the user sets the start frame and the end frame based on the candidate image frames is described below by using an example with reference to the accompanying drawings.

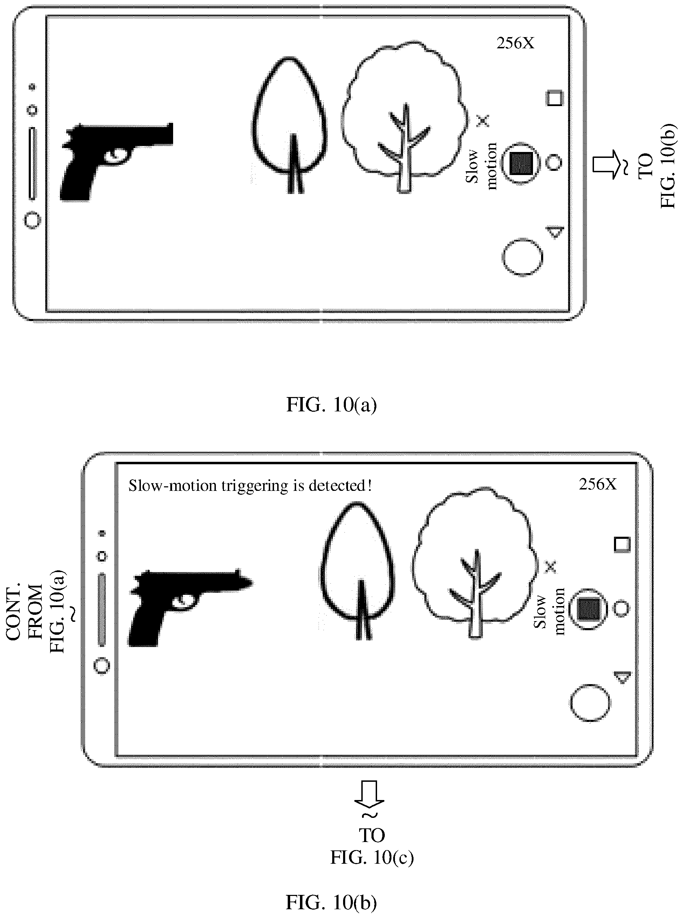

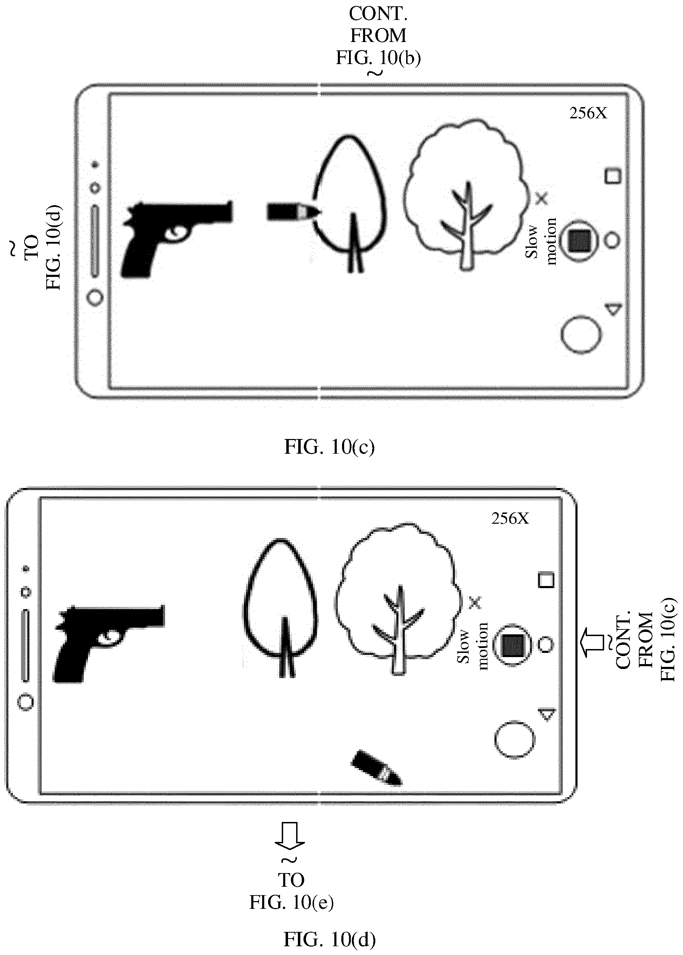

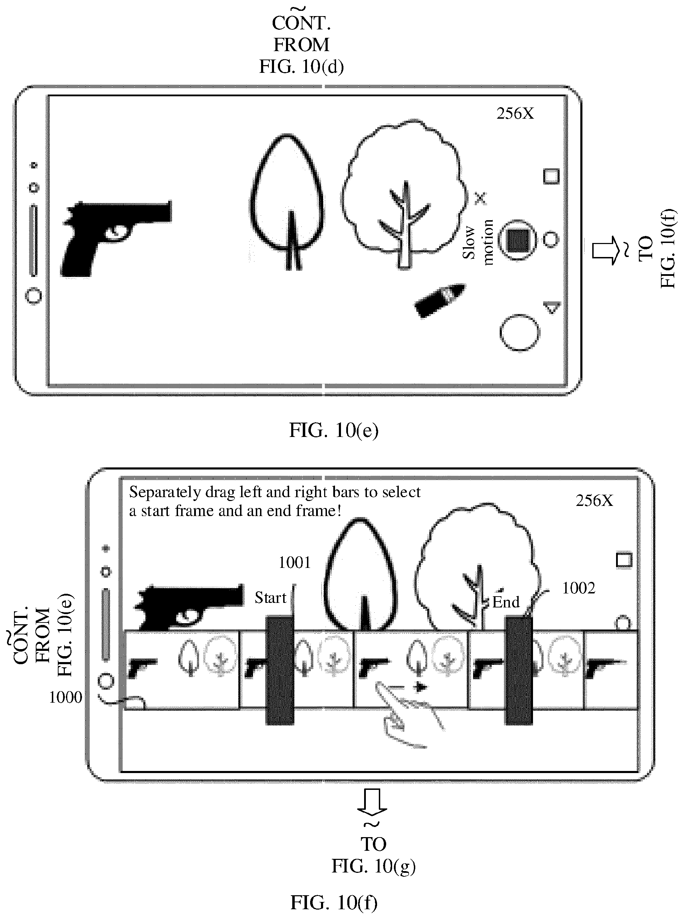

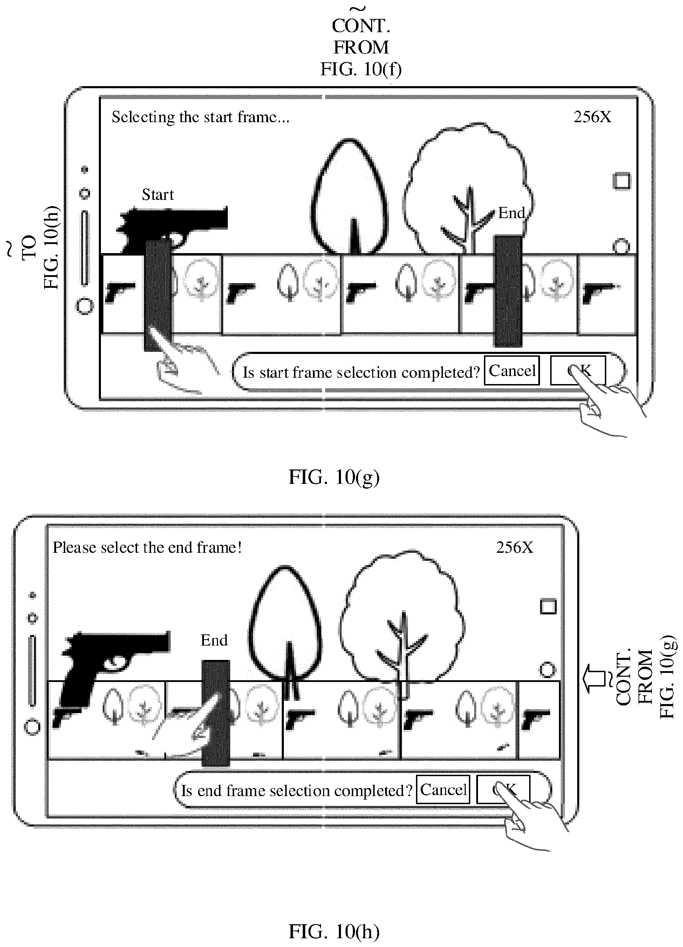

For example, after detecting the video recording operation of the user, the mobile phone displays an image shooting interface and a recorded image that are shown in FIG. 10(a). As shown in FIG. 10(b), the mobile phone may prompt, on the image shooting interface, the user that slow-motion triggering is detected. Then, as shown in FIG. 10(c) to FIG. 10(e), the mobile phone continues to refresh and display a recorded image on the image shooting interface until the mobile phone stops capturing an image frame and then stops refreshing and displaying the recorded image. Then, as shown in FIG. 10(f), the mobile phone may display thumbnails 1000 of the candidate image frames on the frame selection interface, and prompt the user to set the start frame and the end frame. The thumbnails 1000 of the candidate image frames may slide to switch to display a thumbnail of another candidate image frame in response to a sliding operation of the user. For example, in response to an operation of sliding rightwards by the user based on the thumbnails of the candidate image frames shown in FIG. 10(f), as shown in FIG. 10(g), the thumbnails of the candidate image frames also slide rightwards, so as to display the thumbnail of the another candidate image frame. In addition, as shown in FIG. 10(f), the frame selection interface further includes a first control 1001 used to indicate the start frame and a second control 1002 used to indicate the end frame. The first control 1001 and the second control 1002 may be slid on the thumbnails of the candidate image frames in response to a dragging operation of the user. After detecting an operation of dragging the first control 1001 shown in FIG. 10(f) by the user, the mobile phone may prompt, on the frame selection interface as shown in FIG. 10(g), that the user is selecting the start frame. Refer to FIG. 10(g), the mobile phone may further prompt, on the frame selection interface, the user whether the start frame selection is completed. After detecting an operation of tapping an "OK" control by the user, the mobile phone determines that the start frame selection is completed. Then, as shown in FIG. 10(h), the mobile phone may prompt, on the frame selection interface, the user to select the end frame. A manner of selecting the end frame is similar to that of selecting the start frame. Details are not described again. In some embodiments, after detecting the video recording operation of the user, the mobile phone may further display a slow-motion rate on an interface of a video recording process, for example, may be "256X" shown in FIG. 10(a) to FIG. 10(h).

In some other embodiments, the user may separately select the start frame and the end frame based on the first control 1001 and the second control 1002, and the mobile phone may prompt the user on the frame selection interface "Is the selection of the start frame and the end frame completed?". After detecting the operation of tapping the "OK" control by the user, the mobile phone obtains the start frame corresponding to a location of the first control 1001 and the end frame corresponding to a location of the second control 1002.

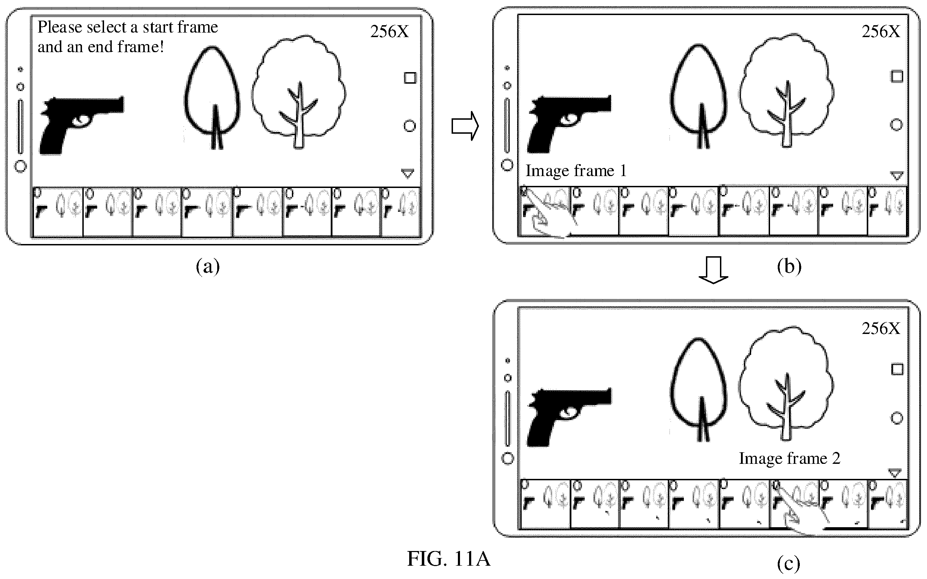

For another example, after detecting slow-motion triggering, the mobile phone determines that an image frame 1 is the start frame if a preset operation 1 performed by the user on the image frame 1 in the thumbnails of the candidate image frames is detected. The mobile phone determines that an image frame 2 is the end frame if a preset operation 2 performed by the user on the image frame 2 in the thumbnails of the candidate image frames is detected. For example, the preset operation 1 and the preset operation 2 may be operations such as tapping, double-clicking, or pressing. Specific forms of the preset operation 1 and the preset operation 2 are not limited in embodiments of this application. In some embodiments, refer to (a) in FIG. 11A. After detecting slow-motion triggering, the mobile phone prompts, on the frame selection interface, the user to select the start frame and the end frame. Refer to (b) in FIG. 11A and (c) in FIG. 11A, after detecting an operation that the user taps the image frame 1 and the image frame 2 in the thumbnails of the candidate image frames, the mobile phone determines that, in the image frame 1 and the image frame 2, an image frame with a higher time sequence is the start frame, another image frame with a lower time sequence is the end frame.

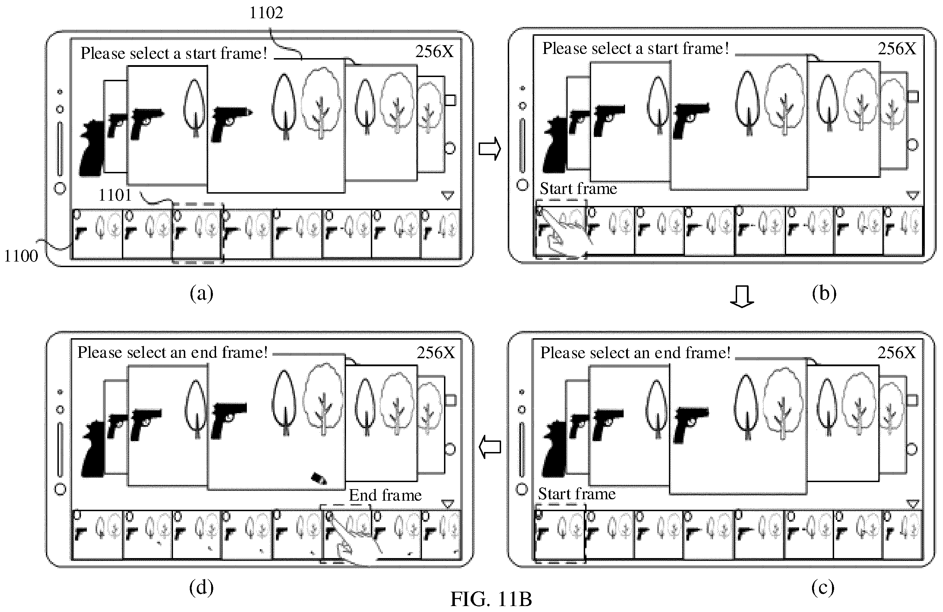

For another example, after detecting slow-motion triggering, as shown in (a) in FIG. 11B, the mobile phone may display thumbnails 1100 of the candidate image frames on the frame selection interface. The thumbnails of the candidate image frames further include a selection control 1101 for selecting a start frame and an end frame. The selection control 1101 may select one of the image frames. Refer to (b) in FIG. 11B, the selection control 1101 may be slid on the thumbnails of the candidate image frames in response to a dragging operation of the user, to select different image frames. In addition, the interface further includes a large image 1102 of the image frame selected by the selection control 1101. When the selection control 1101 slides on the thumbnails of the candidate image frames, the large image 1102 may display, in a form of an animation, an image frame at a location of the control 1101 in the thumbnails of the candidate image frames and an adjacent image frame in a scrolling manner. In this way, the image frame corresponding to the selection control 1101 in real time can be displayed in a form of a large image on the frame selection interface, so that the user can clearly see specific content of an image frame selected by the selection control 1101, and the user can accurately select the start frame and the end frame. Refer to(a) in FIG. 11B,, the mobile phone may first prompt the user to select the start frame. As shown in FIG. 10(b), after the mobile phone detects that the user taps the image frame selected by the selection control 1101, a selection identifier is displayed on the image frame (for example, √ or text identification "start frame" as shown in the figure), and the image frame is determined as the start frame. Then, refer to (c) in FIG. 11B. The mobile phone may prompt the user to select the end frame. As shown in (d) in FIG. 11B, a manner of selecting the end frame is similar to that of selecting the start frame. Details are not described again.

In some other embodiments, after detecting slow-motion triggering, the mobile phone may display, on the frame selection interface, an image frame at a preset location in the candidate image frames in a form of a large image. For example, the preset location is a middle location of the candidate image frames, an interface boundary location, or the like.

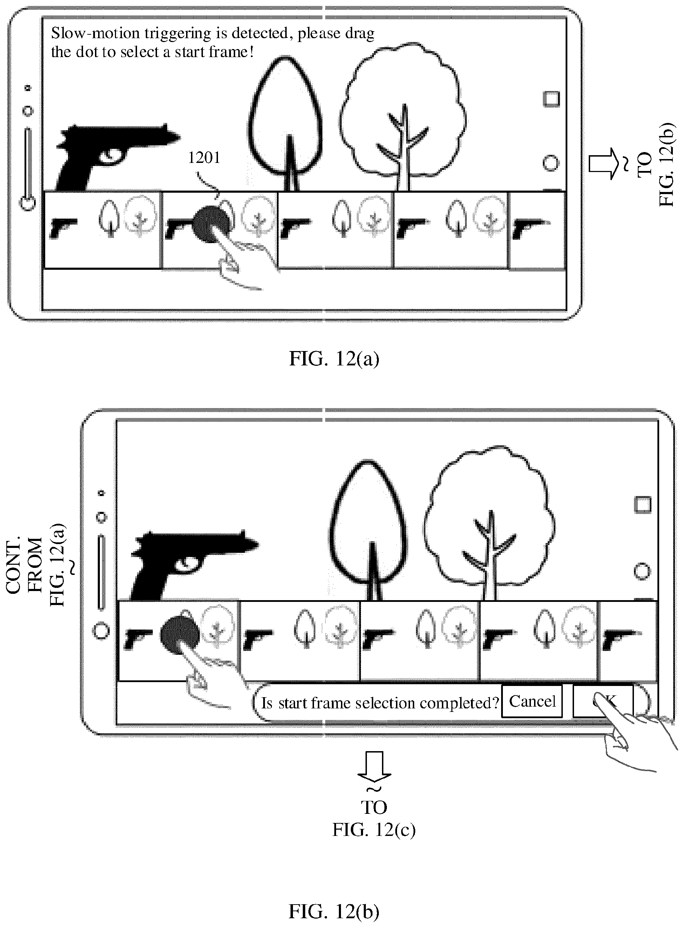

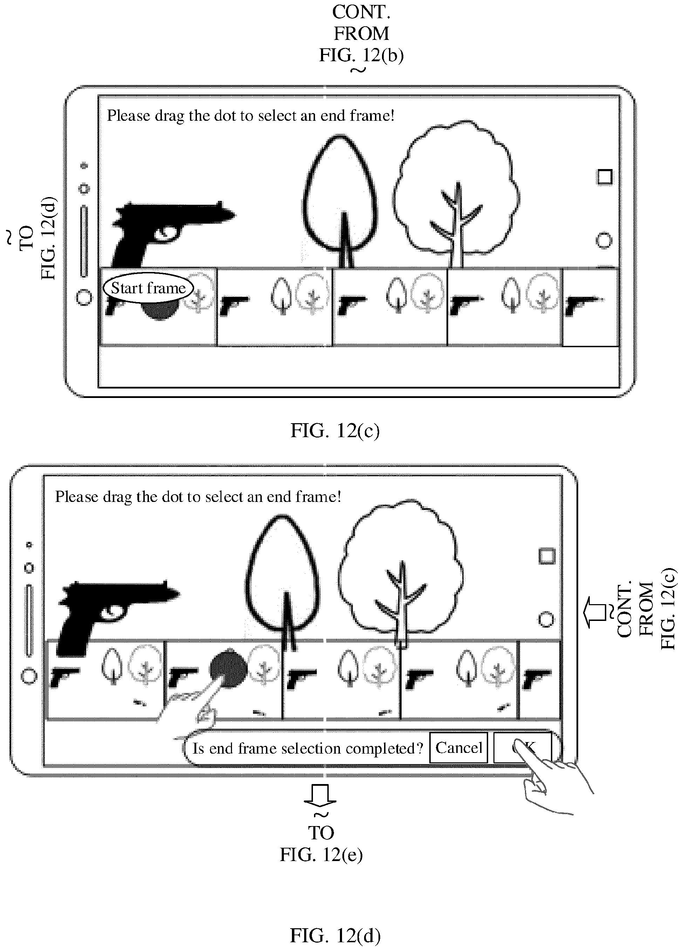

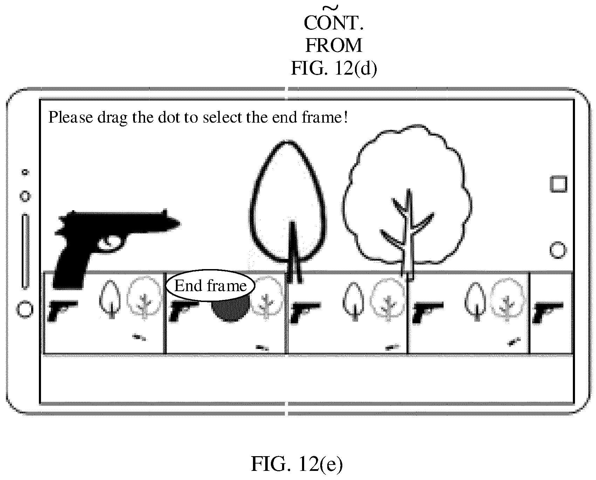

For another example, the selection control may be replaced with a draggable dot 1201 shown in FIG. 12(a) to FIG. 12(e) or a control in another form. A specific form of the selection control is not limited in embodiments of this application. In addition, the mobile phone may display or may not display, on the frame selection interface, a large image of an image frame selected by the selection control. A process in which the user selects the start frame and the end frame is similar to the method shown in (a) in FIG. 11B to (d) in FIG. 11B. Details are not described again. In addition, in the example shown in FIG. 12(a) to FIG. 12(e), after detecting slow-motion triggering, the mobile phone no longer refreshes and displays a new recorded image on the background of the frame selection interface, but continuously displays, on the background, a recorded image captured when low-motion triggering is stored, and displays the thumbnails of the candidate image frames on the foreground of the frame selection interface.

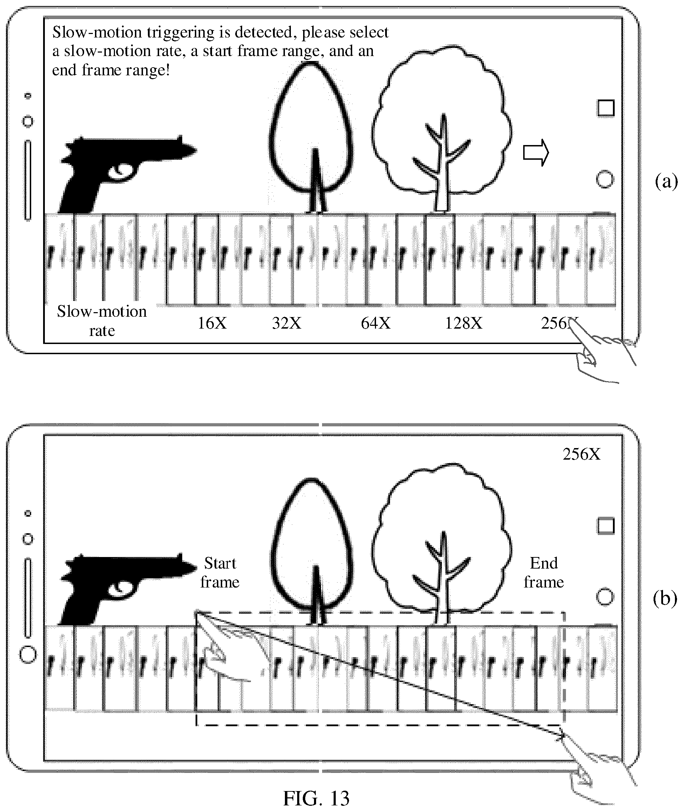

For another example, after detecting slow-motion triggering, as shown in (a) in FIG. 13, the mobile phone may display the thumbnails of the candidate image frames, and prompt the user to select ranges corresponding to the start frame and the end frame. As shown in (b) in FIG. 13, after detecting a frame selection operation performed by the user based on the thumbnails of the candidate image frames, the mobile phone determines that a first frame of image in a selected image frame range is the start frame, and a last frame of image in the selected image frame range is the end frame. In some embodiments, if the mobile phone does not obtain the slow-motion rate in step 203, as shown in (a) in FIG. 13, the mobile phone may further prompt the user to select the slow-motion rate. The mobile phone may display a plurality of rate controls on the frame selection interface for the user to select.

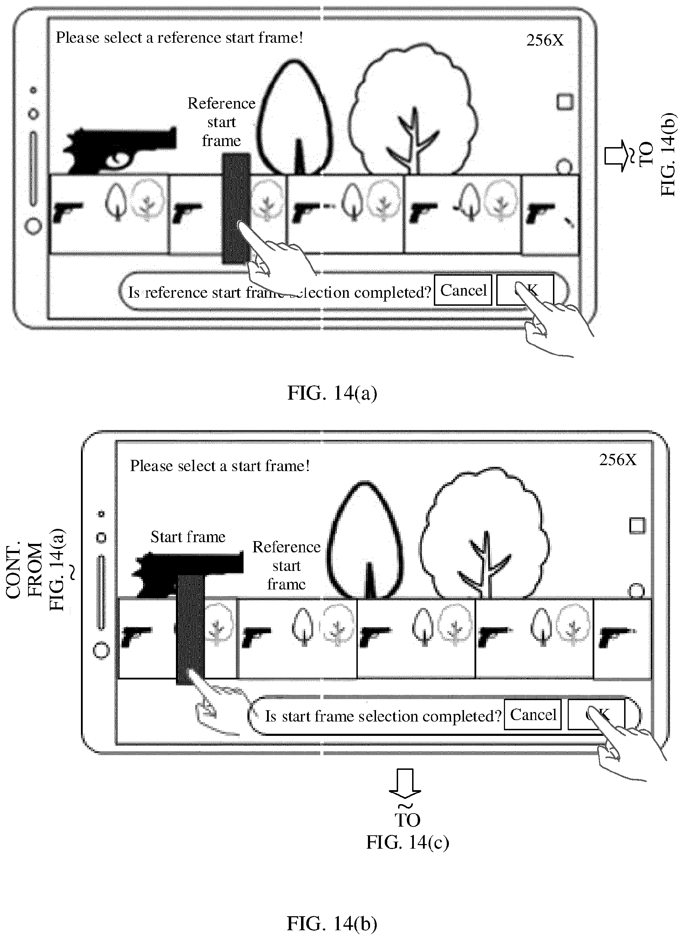

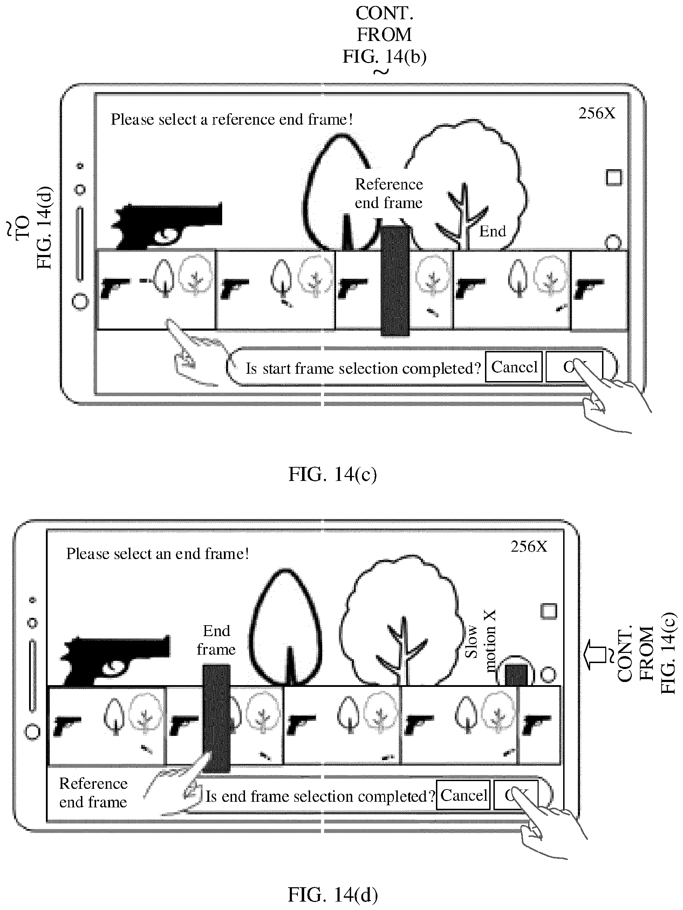

For another example, after detecting slow-motion triggering, as shown in FIG. 14(a), the mobile phone may display, on the frame selection interface, thumbnails of the candidate image frames obtained at the large frame extraction interval, so that the user selects the reference start frame at a coarse granularity. After detecting an operation of selecting the reference start frame by the user, as shown in FIG. 14(b), the mobile phone displays, on the frame selection interface, thumbnails of the candidate image frames (namely, the third image frame set) near the reference start frame that is obtained at the small frame extraction interval. In this way, the user can select the start frame precisely at a fine granularity. Similarly, as shown in FIG. 14(c) and FIG. 14(d), the mobile phone may further select the reference end frame and the end frame. Details are not described again. In addition, in the example shown in FIG. 14, after detecting slow-motion triggering, the mobile phone continues to refresh a newly obtained recorded image on the background of the frame selection interface, and simultaneously displays the thumbnails of the candidate image frames on the foreground of the frame selection interface.

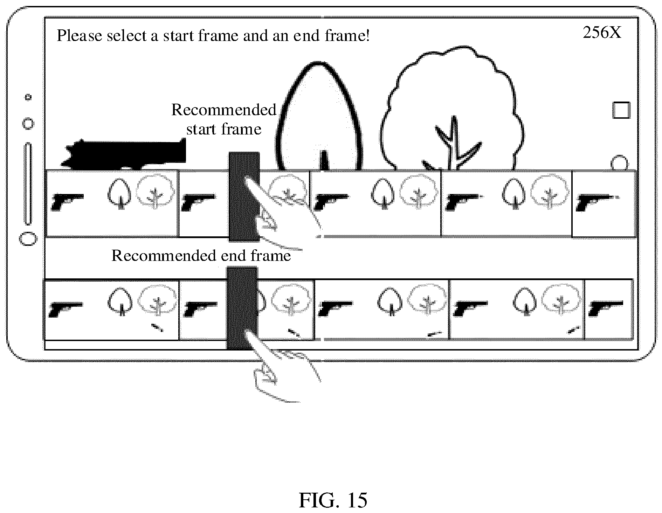

For another example, after detecting slow-motion triggering, the mobile phone displays the thumbnails of the candidate image frames on the frame selection interface, and identifies the recommended start frame and the recommended end frame, so that the user can quickly and precisely select the start frame and the end frame respectively near the recommended start frame and the recommended end frame. For example, as shown in FIG. 15, the candidate image frames include a fifth image frame set and a sixth image frame set. The fifth image frame set includes the recommended start frame and a plurality of adjacent frames of images that are shown in a first row of thumbnails in FIG. 15. The sixth image frame set includes the recommended end frame and a plurality of adjacent frames of images that are shown in a second row of thumbnails in FIG. 15. The user may set the start frame based on the fifth image frame set and the recommended start frame, and set the end frame based on the sixth image frame set and the recommended end frame.

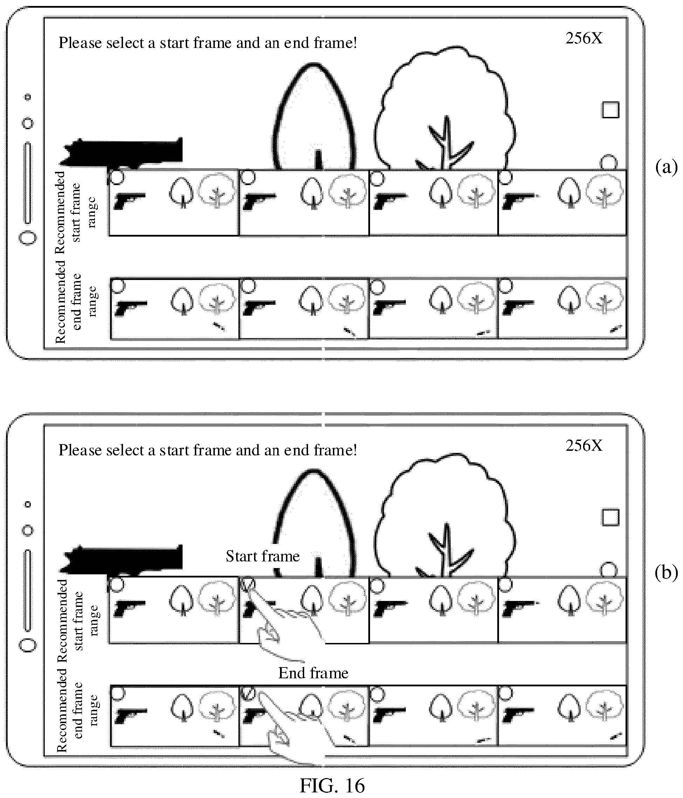

For another example, after detecting slow-motion triggering, as shown in (a) and (b) in FIG. 16, the mobile phone displays the thumbnails of the candidate image frames on the frame selection interface, and includes the recommended start frame range and the recommended end frame range, so that the user can quickly and precisely select the start frame and the end frame respectively within or near the recommended start frame range and the recommended end frame range.

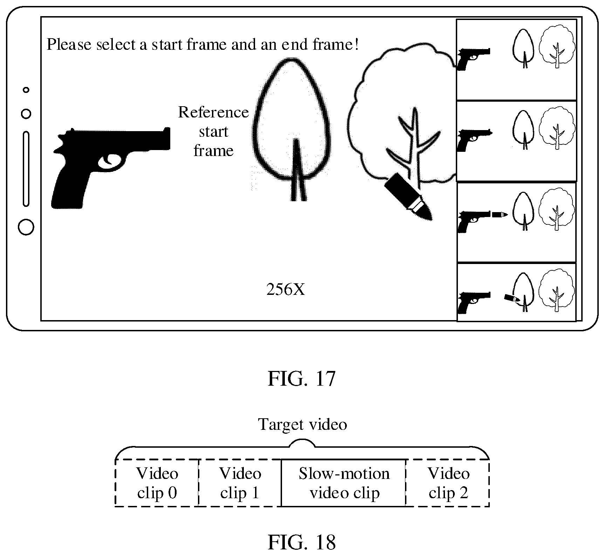

FIG. 10(a) to FIG. 10(h) to FIG. 16 are described by using an example in which thumbnails of to-be-displayed image frames are arranged horizontally on the frame selection interface. For example, for a schematic diagram of vertical arrangement of thumbnails of to-be-displayed image frames, refer to FIG. 17.

208: The mobile phone generates the target video, where the target video includes the slow-motion video clip, and the slow-motion video clip corresponds to the start frame and the end frame.

As shown in FIG. 9, after obtaining the start frame and the end frame, the mobile phone may generate the target video. The target video includes the slow-motion video clip, and the slow-motion video clip is obtained based on the target image frame between the start frame and the end frame.

It should be noted that, although in step 207, the user selects the start frame and the end frame of the target image frame based on the thumbnails of the candidate image frames, the target image frame is an image frame whose frame rate is f2 between the start frame and the end frame. Alternatively, the target image frame is an image frame obtained by performing frame interpolation on the image frame whose frame rate is f2 between the start frame and the end frame. A frame rate of the target image frame is f4, and f4 may be greater than or equal to f2.

After performing ISP processing and image post-processing on the target image frame whose frame rate is f4, the mobile phone generates the slow-motion video clip through encoding based on the encoding frame rate. The image post-processing operation may be performed in a processor such as a CPU, a GPU, or an NPU. For example, the image post-processing operation may include image smoothing, image sharpening, image enhancement, histogram equalization, image super-resolution, noise reduction, or frame interpolation.

The frame rate f4 of the target image frame may be referred to as a video recording frame rate of the slow-motion video clip. The encoding frame rate of the slow-motion video clip may be far less than the video recording frame rate. For example, the video recording frame rate may be 7680 fps, and the encoding frame rate may be 30 fps or 25 fps. In some embodiments, the encoding frame rate is equal to f3. For example, if f2 is 1920 fps, f4 is 7680 fps, and the encoding frame rate is 30 fps, the mobile phone may perform frame interpolation on an image frame whose frame rate is 1920 fps between the start frame and the end frame, to obtain a target image frame whose frame rate is 7680 fps. The mobile phone performs video encoding on the target image frame whose frame rate is 7680 fps at 30 fps, so as to generate a slow-motion video clip. The video recording frame rate f4 of the slow-motion video clip is 7680 fps.

In some embodiments, f4 is a default preset frame rate, or an encoding frame rate used when the target image frame is encoded last time to generate the slow-motion video clip.

In some other embodiments, if the mobile phone obtains the slow-motion rate in step 203, the video recording frame rate f4 corresponds to the obtained slow-motion rate. When the video recording frame rate corresponding to the slow-motion rate is the same as f2, f4 is the same as f2. When the video recording frame rate corresponding to the slow-motion rate is greater than f2, f4 is greater than f2, and f4 is the video recording frame rate corresponding to the slow-motion rate. For example, if f2 is 960 fps, the slow-motion rate is 32X, and the reference video recording frame rate is 30 fps, the video recording frame rate corresponding to the slow-motion rate is also 32 x 30 fps = 960 fps, which is the same as f2. Therefore, f4 is also 960 fps. If f2 is 960 fps, the slow-motion rate is 256X, and the reference video recording frame rate is 30 fps, the video recording frame rate corresponding to the slow-motion rate is 256 x 30 fps = 7680 fps, which is greater than f2. Therefore, f4 is 7680 fps.

If the mobile phone does not obtain the slow-motion rate in step 203, the mobile phone may obtain the slow-motion rate in step 208, so as to obtain the video recording frame rate corresponding to the slow-motion rate, where the frame rate is f4. Alternatively, the mobile phone may obtain the encoding frame rate f4 of the target image frame in step 208. For example, in the buffer solution shown in FIG. 8, a target image frame 80 whose frame rate is f2 between a start frame and an end frame in the buffer queue 2 may be used for frame interpolation to generate the target image frame whose frame rate is f4, so as to perform encoding to generate the slow-motion video clip.

In a possible implementation solution, f1 is 30 fps or 25 fps, f2 is 1920 fps, the slow-motion rate is 256X, f3 is equal to f1, and f4 is 7680 fps.

In some embodiments, refer to FIG. 18. The target video may further include a video clip 1 before the slow-motion video clip, and/or a video clip 2 after the slow-motion video clip. In the first image frame set and the second image frame set, the mobile phone performs frame extraction on an image frame (which is referred to as an eighth image frame set) whose frame rate is f2 before the start frame, to obtain an image frame whose frame rate is f3, and generate the video clip 1 after ISP processing, image post-processing, and encoding. In the first image frame set and the second image frame set, the mobile phone performs frame extraction on an image frame (which is referred to as a ninth image frame) whose frame rate is f2 after the end frame, to obtain an image frame whose frame rate is f3, and generate the video clip 2 (which is also referred to as a second video clip) after ISP processing, image post-processing, and encoding. For example, in the buffer solution shown in FIG. 8, the mobile phone may perform frame extraction on an image frame whose capture moment in the buffer queue 2 is before the start frame selected by the user to form an image frame whose frame rate is f3, and move the image frame to the queue head of the buffer queue 1 to obtain an image frame set 801. The image frame set 801 in the buffer queue 1 may be used to generate a standard-speed video clip 1 through encoding. The mobile phone may perform frame extraction on an image frame whose capture moment in the buffer queue 2 is after the end frame selected by the user to form an image frame whose frame rate is f3, and move the image frame to a queue head of the buffer queue 3 to obtain an image frame set 802. The image frame set 802 in the buffer queue 3 may be used to generate a standard-speed video clip 2 through encoding.

It may be understood that if the start frame is a first image frame in the buffered image frames whose frame rate is f2, the mobile phone no longer generates the video clip 1, or the video clip 1 is empty. If the end frame is the last image frame in the buffered image frames whose frame rate is f2, the mobile phone no longer generates the video clip 2, or the video clip 2 is empty.

In some embodiments, refer to FIG. 18. The target video may further include a video clip 0 before the video clip 1. After performing ISP processing and image post-processing on a buffered image frame (which is referred to as a seventh image frame set) whose frame rate is f3 before the duration of T0, the mobile phone encodes the image frame at the frame rate f3 to generate the video clip 0. For example, in the buffer solution shown in FIG. 8, the image frame set 800 that is buffered in the buffer queue 1 and whose frame rate is f3 may be used to generate the standard-speed video clip 0 through encoding. The video clip 0 and the video clip 1 may be referred to as a first video clip.

That is, a sequence of video clips in the target video may be successively: the video clip 0, the video clip 1, the slow-motion video clip, and the video clip 2, namely, the first video clip, the slow-motion video clip, and the second video clip.

In the solution described in the foregoing embodiment, the start frame and the end frame that are used to generate the target image frame of the slow-motion video clip are accurately selected by the user in the video recording process, that is, the user accurately selects the start location and the end location of the slow-motion video clip in the target video. Therefore, false detection that occurs when the mobile phone automatically detects the start time/end time of the slow motion can be avoided, so that the generated slow-motion video clip can accurately correspond to a photographed slow-motion highlight moment, and a personalized requirement of the user for the slow-motion highlight moment can be met.

Subsequently, after detecting a play operation of the user, the mobile phone plays the generated target video, including playing the video clip 0, the video clip 1, the slow-motion video clip, and the video clip 2 in the target video. A playback frame rate of the target video is less than f4. The playback frame rate is usually equal to the encoding frame rate, or has a small difference from the encoding frame rate. When the encoding frame rate is far less than the video recording frame rate of the slow-motion video clip, the playback frame rate is also far less than the video recording frame rate of the slow-motion video clip. In this way, when the slow-motion video clip recorded at the video recording frame rate f4 in the target video is played at the playback frame rate, a photographed motion process corresponding to the slow-motion video clip may be lengthened and then slowly played, so as to facilitate the user to carefully and clearly watch the slow-motion highlight moment over a long period of time.

However, video recording frame rates and encoding frame rates of the video clip 0, the video clip 1, and the video clip 2 are all f3, and the playback frame rate is equal to or has a small difference from the encoding frame rate, that is, the playback frame rate is equal to or has a small difference from the video recording frame rate. Therefore, the video clip 0, the video clip 1, and the video clip 2 may be referred to as standard-speed video clips.

In addition to the slow-motion video clip, the target video may further include a standard-speed video clip before the slow-motion video clip, for example, the video clip 0 or the video clip 1, and may further include a standard-speed video after the slow-motion video clip, for example, the video clip 2. In this way, the generated target video may give, to the user, visual contrast impact from a standard-speed video clip to a slow-motion video clip played at a low speed, and then to a standard-speed video clip, so that user experience is good.

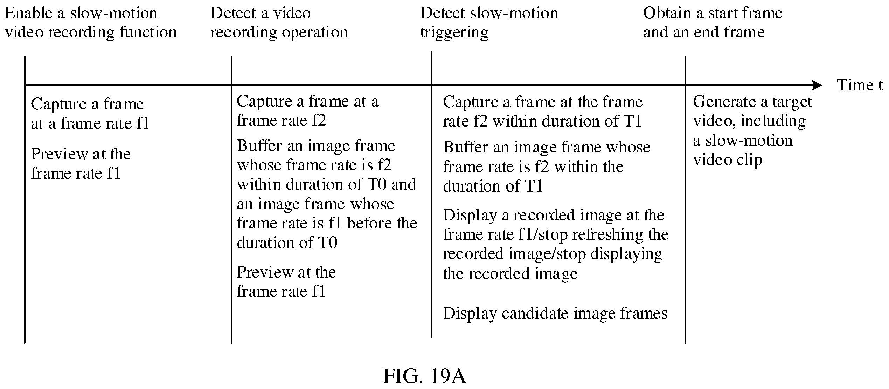

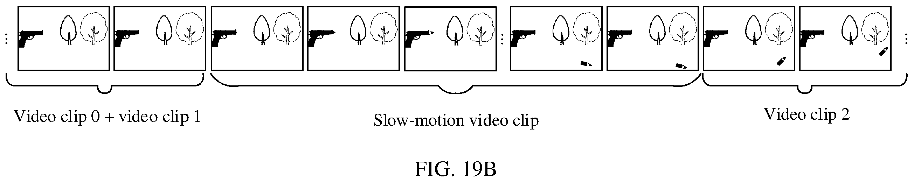

For example, for a sequence diagram of the slow-motion video recording method described in the foregoing embodiments, refer to FIG. 19A. For a schematic diagram of an effect of a video frame generated by the mobile phone for playing the target video, refer to FIG. 19B.

In some other embodiments, after step 206, the method may further include: The mobile phone captures an image frame within duration of T2 at the frame rate f3, and buffers the image frame. The target video generated by the mobile phone further includes a video clip 3 obtained by performing ISP processing and image post-processing on the buffered image frame whose frame rate is f3 within the duration of T2 and encoding is performed based on the encoded frame rate.

In the solution described in the foregoing embodiment, the mobile phone automatically stops capturing an image frame. In some other embodiments, after the mobile phone detects slow-motion triggering, the method may further include: The mobile phone captures an image frame at the frame rate f2 and buffers the image frame, and stops capturing an image frame only after detecting a video recording stop operation of the user.

For slow-motion video recording, on the one hand, to obtain a better slow-motion effect, the encoding frame rate of the slow-motion video becomes higher, and correspondingly, the capture frame rate f2 in the video recording process becomes higher. On the other hand, when a high-speed motion process is photographed, a duration of the motion process is short. To better see motion details in a short time, the encoding frame rate of the slow-motion video is high, and correspondingly, the capture frame rate f2 in the video recording process is also high. In the slow-motion video recording method provided in embodiments of this application, the mobile phone does not buffer all high-frame-rate image frames captured at f2 in the entire video recording process, but buffers only high-frame-rate image frames within the duration of TO and the duration of T1, and performs ISP processing and preview after frame extraction on the high-frame-rate image frames. Therefore, requirements on an image buffering and transmission capability and a computing capability of the mobile phone can be reduced.

In addition, the mobile phone performs high-frame-rate encoding only on a high-frame-rate image frame between the start frame and the end frame that are selected by the user, and performs low-frame-rate encoding on another low-frame-rate image frame in the video recording process. This can reduce an image processing task and lower a requirement on the computing capability of the mobile phone.

In addition, in the slow-motion video recording method provided in embodiments of this application, the user may select the start frame and the end frame in the video recording process to generate the slow-motion video clip in the target video, and does not need to perform secondary editing after the video is generated to obtain the slow-motion video clip. The solution of generating the video first and then editing the video clip to obtain the slow-motion video clip requires the ISP to process the captured image frames in real time during the video recording process, and then encode and generate the video. However, a processing capability of the ISP is limited. It is difficult to realize real-time processing of image frames with a high capture frame rate.

In the foregoing embodiment, the mobile phone buffers an image frame whose frame rate is f2 within the duration of TO only after starting video recording, and does not buffer an image in the preview state. In some other embodiments, the mobile phone buffers, in the preview state, the image frame whose frame rate is f2 within the duration of TO. For example, in a possible implementation, after the slow-motion video recording function is enabled, the mobile phone captures the image frame at the frame rate f2 in the preview state, performs frame extraction to obtain an image frame whose frame rate is f3, and then sends the image frame for preview. In addition, the mobile phone first buffers, in real time, the image frame captured at the high frame rate f2 until buffering duration is equal to TO. After the buffering duration is longer than T0, the mobile phone buffers, in real time, an image frame captured at the high frame rate f2 within the duration of TO between the current moment t0 and the previous moment t1, performs frame extraction on an image frame whose frame rate is f2 before the duration of T0, and buffers an image frame whose frame rate is f3 after obtaining the image frame whose frame rate is f3. After detecting the video recording operation of the user, the mobile phone continues buffering an image frame based on a previous buffer state. That is, after detecting the video recording operation of the user, the mobile phone continues, based on a buffering progress in the preview state, buffering the image frame captured at the frame rate f2 within the duration of TO between the current moment t0 and the previous moment t1, and the image frame whose frame rate is f3 after frame extraction is performed on the image frame captured at the frame rate f2 before the moment t1. Then, the mobile phone may perform step 205 to step 208 in the foregoing embodiment.

In some cases, the mobile phone may detect slow-motion triggering soon after detecting the video recording operation of the user. For example, a time difference between a moment at which slow-motion triggering is detected and a moment at which the video recording operation is detected is less than TO. In this case, if the mobile phone starts to buffer the image frame only after detecting the video recording operation of the user, the buffered image frame at the high frame rate f2 may not include a complete slow-motion process that occurs before slow-motion triggering.

If the mobile phone buffers an image frame at the high frame rate f2 in the preview state, and continues buffering the image frame based on a buffer state in the preview state after detecting the video recording operation of the user, the buffered image frame at the high frame rate f2 can include as much as possible the complete slow-motion process that occurs before slow-motion triggering. In this way, when the mobile phone immediately detects slow-motion triggering after detecting the video recording operation, the mobile phone can also generate a complete slow-motion video clip based on the buffered image frame.

The foregoing uses an example in which the electronic device is a mobile phone as an example for description. When the electronic device is another device such as a tablet computer or a camera, the slow-motion video recording method provided in the foregoing embodiments may still be used. In a video recording process, a user precisely sets a start location and an end location of a slow-motion video clip. In this way, a generated slow-motion video clip can accurately correspond to a photographed slow-motion highlight moment, and can further meet a personalized requirement of the user for the slow-motion highlight moment. Details are not described herein again.

It may be understood that, to implement the foregoing functions, the electronic device includes a corresponding hardware and/or software module for performing each function. With reference to algorithm steps in the examples described with reference to embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of this application.

In embodiments, the electronic device may be divided into function modules based on the foregoing method examples, for example, each function module may be obtained through division based on each corresponding function, or two or more functions may be integrated into one processing module. The integrated module may be implemented in a form of hardware. It should be noted that, in embodiments, division into modules is an example and is merely logical function division. During actual implementation, there may be another division manner.

An embodiment of this application further provides an electronic device, including one or more processors and one or more memories. The one or more memories are coupled to the one or more processors. The one or more memories are configured to store computer program code, and the computer program code includes computer instructions. When the one or more processors execute the computer instructions, the electronic device is enabled to perform the foregoing related method steps, to implement the slow-motion video recording method in the foregoing embodiments.

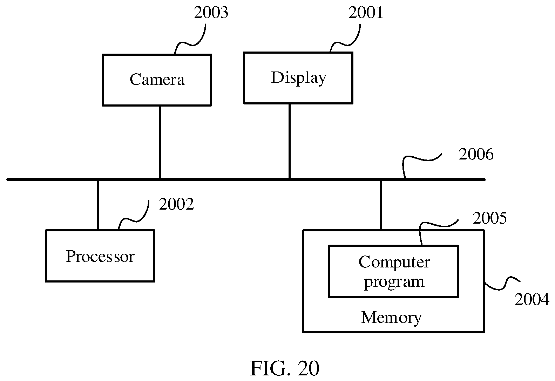

An embodiment of this application further provides an electronic device. As shown in FIG. 20, the electronic device includes: a display 2001, one or more processors 2002, a plurality of cameras 2003, a memory 2004, and one or more computer programs 2005. The components may be connected through one or more communication buses 2006. The one or more computer programs 2005 are stored in the memory 2004 and are configured to be executed by the one or more processors 2002. The one or more computer programs 2005 include instructions, and the instructions may be used to perform the steps in the foregoing embodiments. All related content of the steps in the foregoing method embodiments may be cited in function descriptions of corresponding physical components. Details are not described herein again.

For example, the processor 2002 may be specifically the processor 110 shown in FIG. 1, the memory 2004 may be specifically the internal memory 121 shown in FIG. 1, the camera 2003 may be specifically the camera 193 shown in FIG. 1, and the display 2001 may be specifically the display 194 shown in FIG. 1.

An embodiment of this application further provides a computer-readable storage medium. The computer-readable storage medium stores computer instructions. When the computer instructions are executed on an electronic device, the electronic device is enabled to perform the foregoing related method steps to implement the slow-motion video recording method in the foregoing embodiments.

An embodiment of this application further provides a computer program product. When the computer program product runs on a computer, the computer is enabled to perform the foregoing related steps, to implement the slow-motion video recording method performed by the electronic device in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, so that the chip performs the slow-motion video recording method performed by the electronic device in the foregoing method embodiments.

The electronic device, the computer-readable storage medium, the computer program product, or the chip provided in embodiments is configured to perform the corresponding method provided above. Therefore, for beneficial effects that can be achieved, refer to the beneficial effects in the corresponding method provided above. Details are not described herein again.

Based on descriptions about the foregoing implementations, a person skilled in the art may understand that, for a purpose of convenient and brief description, division into the foregoing function modules is used as an example for illustration. In actual application, the foregoing functions may be allocated to different function modules and implemented based on a requirement. In other words, an inner structure of an apparatus is divided into different function modules to implement all or some of the functions described above.

In the several embodiments provided in this application, it should be understood that the disclosed apparatus and method may be implemented in other manners. For example, the described apparatus embodiments are merely examples. For example, division into the modules or units is merely logical function division. During actual implementation, there may be another division manner. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, function units in embodiments of this application may be integrated into one processing unit, each of the units may exist alone physically, or two or more units are integrated into one unit. The integrated unit may be implemented in a form of hardware, or may be implemented in a form of a software function unit.

When the integrated unit is implemented in the form of a software function unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for enabling a device (which may be a single-chip microcomputer, a chip, or the like) or a processor (processor) to perform all or some of the steps of the method described in embodiments of this application. The foregoing storage medium includes any medium that can store program code, such as a USB flash drive, a removable hard disk, a read-only memory (read-only memory, ROM), a random access memory (random access memory, RAM), a magnetic disk, or a compact disc.

The foregoing descriptions are merely specific implementations of this application, but are not intended to limit the protection scope of this application. The protection scope of this application shall be subject to the protection scope of the claims

## Claims

1. A video recording method, applied to an electronic device, wherein the method comprises:
enabling (201) a video recording function;
after a video recording operation of a user is detected, if slow-motion triggering is detected, displaying (207) candidate image frames on a frame selection interface, wherein the candidate image frames comprise a plurality of frames of images;
determining a start frame and an end frame that are set by the user based on the candidate image frames; and
generating a target video (208), wherein the target video comprises a slow-motion video clip, the slow-motion video clip corresponds to the start frame and the end frame, and a video recording frame rate of the slow-motion video clip is higher than an encoding frame rate of the slow-motion video clip, wherein the method further comprises:
after the video recording operation of the user is detected, capturing (204) image frames at a first frame rate, and buffering a first image frame set, wherein the first image frame set comprises latest captured image frames within duration of TO before slow-motion triggering is detected; and
after slow-motion triggering is detected, capturing (206) image frames at the first frame rate within duration of T1, and buffering a second image frame set, wherein the second image frame set comprises the image frames captured at the first frame rate within the duration of T1, and
the candidate image frames are from the first image frame set and the second image frame set,
wherein the candidate image frames are obtained by performing frame extraction at a first interval on the image frames in the first image frame set and the second image frame set; and
the determining a start frame and an end frame that are set by the user based on the candidate image frames comprises:
determining a reference start frame that is set by the user based on the candidate image frames;
displaying a third image frame set on the frame selection interface, wherein the third image frame set comprises the reference start frame, and the third image frame set is obtained by performing frame extraction at a second interval on the image frames in the first image frame set and the second image frame set, wherein the second interval is less than the first interval;
determining the start frame that is set by the user based on the third image frame set;
determining a reference end frame that is set by the user based on the candidate image frames;
displaying a fourth image frame set on the interface, wherein the fourth image frame set comprises the reference end frame, and the fourth image frame set is obtained by performing frame extraction at the second interval on the image frames in the first image frame set and the second image frame set; and
determining the end frame that is set by the user based on the fourth image frame set.

2. The method according to claim 1, wherein a quantity of candidate image frames is positively correlated with a slow-motion rate of the slow-motion video clip; or
a frame extraction interval for obtaining the candidate image frames by performing frame extraction on the image frames in the first image frame set and the second image frame set is positively correlated with a slow-motion rate of the slow-motion video clip.

3. The method according to any one of claims 1 to 2, wherein the slow-motion video clip is obtained from a target image frame between the start frame and the end frame by using the encoding frame rate, wherein
the target image frame is an image frame between the start frame and the end frame in the first image frame set and the second image frame set, and the video recording frame rate is equal to the first frame rate; or
the target image frame is an image frame that is at the video recording frame rate and that is obtained by performing frame interpolation on an image frame at the first frame rate between the start frame and the end frame in the first image frame set and the second image frame set.

4. The method according to any one of claims 1 to 3, wherein the method further comprises:
after the video recording operation of the user is detected, displaying a recorded image on an image shooting interface at a second frame rate, wherein the recorded image is obtained by performing frame extraction on the image frames at the first frame rate, and the second frame rate is less than the first frame rate.

5. The method according to any one of claims 1 to 4, wherein the video recording frame rate corresponds to the slow-motion rate of the slow-motion video clip.

6. The method according to any one of claims 1 to 5, wherein the first frame rate is related to the slow-motion rate of the slow-motion video clip.

7. The method according to any one of claims 1 to 4, wherein the method further comprises:
if slow-motion triggering is detected, prompting, on the frame selection interface, the user to set the start frame and the end frame.

8. An electronic device, comprising:
a camera (2003), configured to capture an image;
a display (2001), configured to display an interface; and
one or more processors (2002) and one or more memories (2004), wherein
the one or more memories (2004) are coupled to the one or more processors (2002), and the one or more memories (2004) are configured to store computer program code (2005), wherein the computer program code (2005) comprises computer instructions, and when the one or more processors (2002) execute the computer instructions, the electronic device performs the video recording method according to any one of claims 1 to 7.

9. A computer-readable storage medium comprising instructions which, when executed by an electronic device comprising a camera (2003) and a display (2001), cause the electronic device to carry out the method according to any one of claims 1 to 7.

10. A computer program product comprising instructions which, when the program is executed by an electronic device comprising a camera (2003) and a display (2001), cause the electronic device to carry out the method according to any one of claims 1 to 7.

11. A chip system, wherein the chip system is used in an electronic device of claim 8, wherein the chip system includes one or more interface circuits and one or more processors, the interface circuit and the processor are interconnected through a line, the interface circuit is configured to receive a signal from a memory of the electronic device, and send the signal to the processor, the signal includes computer instructions stored in the memory, wherein when the processor executes the computer instructions, the electronic device is enabled to perform the video recording method according to any one of claims 1 to 7.

## Patentansprüche

1. Videoaufzeichnungsverfahren, das auf eine elektronische Vorrichtung angewendet wird, wobei das Verfahren umfasst:
Aktivieren (201) einer Videoaufzeichnungsfunktion;
nachdem ein Videoaufzeichnungsvorgang eines Benutzers erkannt wurde, falls eine Zeitlupenauslösung erkannt wurde, Anzeigen (207) von Kandidatenbildframes auf einer Frameauswahlschnittstelle, wobei die Kandidatenbildframes eine Vielzahl von Frames von Bildern umfassen;
Bestimmen eines Startframes und eines Endframes, die durch den Benutzer basierend auf den Kandidatenbildframes eingestellt werden; und
Erzeugen eines Zielvideos (208), wobei das Zielvideo einen Zeitlupenvideoclip umfasst, der Zeitlupenvideoclip dem Startframe und dem Endframe entspricht und eine Videoaufzeichnungsframerate des Zeitlupenvideoclips höher als eine Codierungsframerate des Zeitlupenvideoclips ist, wobei das Verfahren ferner umfasst:
nachdem der Videoaufzeichnungsvorgang des Benutzers erkannt wurde,
Erfassen (204) von Bildframes mit einer ersten Framerate und Zwischenspeichern eines ersten Bildframesatzes, wobei der erste Bildframesatz die zuletzt erfassten Bildframes innerhalb einer Dauer von T0 umfasst, bevor die Zeitlupenauslösung erkannt wurde; und
nachdem die Zeitlupenauslösung erkannt wurde, Erfassen (206) von Bildframes mit der ersten Framerate innerhalb einer Dauer von T1 und Zwischenspeichern eines zweiten Bildframesatzes, wobei der zweite Bildframesatz die Bildframes, die mit der ersten Framerate innerhalb der Dauer von T1 erfasst wurden, umfasst und
die Kandidatenbildframes aus dem ersten Bildframesatz und dem zweiten Bildframesatz stammen,
wobei die Kandidatenbildframes durch Durchführen einer Frameextraktion in einem ersten Intervall an den Bildframes in dem ersten Bildframesatz und dem zweiten Bildframesatz erhalten werden; und
das Bestimmen eines Startframes und eines Endframes, die durch den Benutzer basierend auf den Kandidatenbildframes eingestellt werden, umfasst:
Bestimmen eines Referenzstartframes, das durch den Benutzer basierend auf den Kandidatenbildframes eingestellt wird;
Anzeigen eines dritten Bildframesatzes auf der Frameauswahlschnittstelle, wobei der dritte Bildframesatz das Referenzstartframe umfasst und der dritte Bildframesatz durch Durchführen der Frameextraktion in einem zweiten Intervall an den Bildframes in dem ersten Bildframesatz und dem zweiten Bildframesatz erhalten wird, wobei das zweite Intervall kleiner als das erste Intervall ist;
Bestimmen des Startframes, das durch den Benutzer basierend auf dem dritten Bildframesatz eingestellt wird;
Bestimmen eines Referenzendframes, das durch den Benutzer basierend auf den Kandidatenbildframes eingestellt wird;
Anzeigen eines vierten Bildframesatzes auf der Schnittstelle, wobei der vierte Bildframesatz das Referenzendframe umfasst und der vierte Bildframesatz durch Durchführen der Frameextraktion in dem zweiten Intervall an den Bildframes in dem ersten Bildframesatz und dem zweiten Bildframesatz erhalten wird; und
Bestimmen des Endframes, das durch den Benutzer basierend auf dem vierten Bildframesatz eingestellt wird.

2. Verfahren nach Anspruch 1, wobei eine Menge von Kandidatenbildframes positiv mit einer Zeitlupenrate des Zeitlupenvideoclips korreliert; oder
ein Frameextraktionsintervall zum Erhalten der Kandidatenbildframes durch Durchführen der Frameextraktion an den Bildframes in dem ersten Bildframesatz und dem zweiten Bildframesatz positiv mit einer Zeitlupenrate des Zeitlupenvideoclips korreliert.

3. Verfahren nach einem der Ansprüche 1 bis 2, wobei der Zeitlupenvideoclip aus einem Zielbildframe zwischen dem Startframe und dem Endframe durch Verwenden der Codierungsframerate erhalten wird, wobei
das Zielbildframe ein Bildframe zwischen dem Startframe und dem Endframe in dem ersten Bildframesatz und dem zweiten Bildframesatz ist und die Videoaufzeichnungsframerate gleich der ersten Framerate ist; oder
das Zielbildframe ein Bildframe, das die Videoaufzeichnungsframerate aufweist und das durch Durchführen einer Frameinterpolation an einem Bildframe mit der ersten Bildframerate zwischen dem Startframe und dem Endframe in dem ersten Bildframesatz und dem zweiten Bildframesatz erhalten wird, ist.

4. Verfahren nach einem der Ansprüche 1 bis 3, wobei das Verfahren ferner umfasst: nachdem der Videoaufzeichnungsvorgang des Benutzers erkannt wurde, Anzeigen eines aufgezeichneten Bildes auf einer Bildaufnahmeschnittstelle mit einer zweiten Framerate, wobei das aufgezeichnete Bild durch Durchführen der Frameextraktion an den Bildframes mit der ersten Framerate erhalten wird und die zweite Framerate kleiner als die erste Framerate ist.

5. Verfahren nach einem der Ansprüche 1 bis 4, wobei die Videoaufzeichnungsframerate der Zeitlupenrate des Zeitlupenvideoclips entspricht.

6. Verfahren nach einem der Ansprüche 1 bis 5, wobei sich die erste Framerate auf die Zeitlupenrate des Zeitlupenvideoclips bezieht.

7. Verfahren nach einem der Ansprüche 1 bis 4, wobei das Verfahren ferner umfasst: falls die Zeitlupenauslösung erkannt wurde, Auffordern des Benutzers auf der Frameauswahlschnittstelle, das Startframe und das Endframe einzustellen.

8. Elektronische Vorrichtung, die umfasst:
eine Kamera (2003), die konfiguriert ist, um ein Bild zu erfassen;
eine Anzeige (2001), die konfiguriert ist, um eine Schnittstelle anzuzeigen; und
einen oder mehrere Prozessoren (2002) und einen oder mehrere Speicher (2004), wobei der eine oder die mehreren Speicher (2004) mit dem einen oder den mehreren Prozessoren (2002) gekoppelt sind und der eine oder die mehreren Speicher (2004) konfiguriert sind, um Computerprogrammcode (2005) zu speichern, wobei der Computerprogrammcode (2005) Computeranweisungen umfasst und die elektronische Vorrichtung das Videoaufzeichnungsverfahren nach einem der Ansprüche 1 bis 7 durchführt, wenn der eine oder die mehreren Prozessoren (2002) die Computeranweisungen ausführen.

9. Computerlesbares Speicherungsmedium, das Anweisungen umfasst, die, wenn sie durch eine elektronische Vorrichtung, die eine Kamera (2003) und eine Anzeige (2001) umfasst, ausgeführt werden,
die elektronische Vorrichtung veranlassen, das Verfahren nach einem der Ansprüche 1 bis 7 vorzunehmen.

10. Computerprogrammprodukt, das Anweisungen umfasst, die, wenn das Programm durch eine elektronische Vorrichtung, die eine Kamera (2003) und eine Anzeige (2001) umfasst, ausgeführt wird,
die elektronische Vorrichtung veranlassen, das Verfahren nach einem der Ansprüche 1 bis 7 vorzunehmen.

11. Chipsystem, wobei das Chipsystem in einer elektronischen Vorrichtung nach Anspruch 8 verwendet wird, wobei das Chipsystem eine oder mehrere Schnittstellenschaltungen und einen oder mehrere Prozessoren einschließt, die Schnittstellenschaltung und der Prozessor über eine Leitung miteinander verbunden sind, die Schnittstellenschaltung konfiguriert ist, um ein Signal von einem Speicher der elektronischen Vorrichtung zu empfangen und das Signal an den Prozessor zu senden, das Signal im Speicher gespeicherte Computeranweisungen einschließt, wobei, wenn der Prozessor die Computeranweisungen ausführt, die elektronische Vorrichtung aktiviert wird, um das Videoaufzeichnungsverfahren nach einem der Ansprüche 1 bis 7 durchzuführen.

## Revendications

1. Procédé d'enregistrement vidéo, appliqué à un dispositif électronique, dans lequel le procédé comprend :
l'activation (201) d'une fonction d'enregistrement vidéo ;
après qu'une opération d'enregistrement vidéo d'un utilisateur a été détectée, si un déclenchement de ralenti est détecté, l'affichage (207) de trames d'images candidates sur une interface de sélection de trames, dans lequel les trames d'images candidates comprennent une pluralité de trames d'images ;
la détermination d'une trame de début et d'une trame de fin qui sont définies par l'utilisateur sur la base des trames d'images candidates ; et
la génération d'une vidéo cible (208), dans lequel la vidéo cible comprend un clip vidéo au ralenti, le clip vidéo au ralenti correspond à la trame de début et à la trame de fin, et une fréquence de trames d'enregistrement vidéo du clip vidéo au ralenti est supérieure à une fréquence de trames de codage du clip vidéo au ralenti, dans lequel le procédé comprend en outre :
après que l'opération d'enregistrement vidéo de l'utilisateur a été détectée, la capture (204) de trames d'images à une première fréquence de trames, et la mise en mémoire tampon d'un premier ensemble de trames d'images, dans lequel le premier ensemble de trames d'images comprend des dernières trames d'images capturées pendant une durée de T0 avant que le déclenchement de ralenti ne soit détecté ; et
après qu'un déclenchement de ralenti a été détecté, la capture (206) de trames d'images à la première fréquence de trames pendant une durée de T1, et la mise en mémoire tampon d'un deuxième ensemble de trames d'images, dans lequel le deuxième ensemble de trames d'images comprend les trames d'images capturées à la première fréquence de trames pendant la durée de T1, et
les trames d'images candidates proviennent du premier ensemble de trames d'images et du deuxième ensemble de trames d'images,
dans lequel les trames d'images candidates sont obtenues en effectuant une extraction de trames à un premier intervalle sur les trames d'images dans le premier ensemble de trames d'images et dans le deuxième ensemble de trames d'images ; et
la détermination d'une trame de début et d'une trame de fin qui sont définies par l'utilisateur sur la base des trames d'images candidates comprend :
la détermination d'une trame de début de référence qui est définie par l'utilisateur sur la base des trames d'images candidates ;
l'affichage d'un troisième ensemble de trames d'images sur l'interface de sélection de trames, dans lequel le troisième ensemble de trames d'images comprend la trame de début de référence, et le troisième ensemble de trames d'images est obtenu en effectuant une extraction de trames à un second intervalle sur les trames d'images dans le premier ensemble de trames d'images et dans le deuxième ensemble de trames d'images, dans lequel le second intervalle est inférieur au premier intervalle ; la détermination de la trame de début qui est définie par l'utilisateur sur la base du troisième ensemble de trames d'images ;
la détermination d'une trame de fin de référence qui est définie par l'utilisateur sur la base des trames d'images candidates ;
l'affichage d'un quatrième ensemble de trames d'images sur l'interface, dans lequel le quatrième ensemble de trames d'images comprend la trame de fin de référence, et le quatrième ensemble de trames d'images est obtenu en effectuant une extraction de trames au second intervalle sur les trames d'images dans le premier ensemble de trames d'images et dans le deuxième ensemble de trames d'images ; et
la détermination de la trame de fin qui est définie par l'utilisateur sur la base du quatrième ensemble de trames d'images.

2. Procédé selon la revendication 1, dans lequel une quantité de trames d'images candidates est positivement corrélée avec une vitesse de ralenti du clip vidéo au ralenti ; ou
un intervalle d'extraction de trames pour l'obtention des trames d'images candidates en effectuant une extraction de trames sur les trames d'images dans le premier ensemble de trames d'images et dans le deuxième ensemble de trames d'images est positivement corrélé avec une vitesse de ralenti du clip vidéo au ralenti.

3. Procédé selon l'une quelconque des revendications 1 à 2, dans lequel le clip vidéo au ralenti est obtenu à partir d'une trame d'image cible entre la trame de début et la trame de fin en utilisant la fréquence de trames de codage, dans lequel la trame d'image cible est une trame d'image entre la trame de début et la trame de fin dans le premier ensemble de trames d'images et dans le deuxième ensemble de trames d'images, et la fréquence de trames d'enregistrement vidéo est égale à la première fréquence de trames ; ou
la trame d'image cible est une trame d'image qui est à la fréquence de trames d'enregistrement vidéo et qui est obtenue en effectuant une interpolation de trame sur une trame d'image à la première fréquence de trames entre la trame de début et la trame de fin dans le premier ensemble de trames d'images et dans le deuxième ensemble de trames d'images.

4. Procédé selon l'une quelconque des revendications 1 à 3, dans lequel le procédé comprend en outre :
après que l'opération d'enregistrement vidéo de l'utilisateur a été détectée, l'affichage d'une image enregistrée sur une interface de prise de vue d'images à une seconde fréquence de trames, dans lequel l'image enregistrée est obtenue en effectuant une extraction de trames sur les trames d'images à la première fréquence de trames, et la seconde fréquence de trames est inférieure à la première fréquence de trames.

5. Procédé selon l'une quelconque des revendications 1 à 4, dans lequel la fréquence de trames d'enregistrement vidéo correspond à la vitesse de ralenti du clip vidéo au ralenti.

6. Procédé selon l'une quelconque des revendications 1 à 5, dans lequel la première fréquence de trames est liée à la fréquence de ralenti du clip vidéo au ralenti.

7. Procédé selon l'une quelconque des revendications 1 à 4, dans lequel le procédé comprend en outre :
si un déclenchement de ralenti est détecté, le fait d'inviter l'utilisateur, sur l'interface de sélection de trames, à définir la trame de début et la trame de fin.

8. Dispositif électronique, comprenant :
une caméra (2003), configurée pour capturer une image ;
une unité d'affichage (2001), configurée pour afficher une interface ; et
un ou plusieurs processeurs (2002) et une ou plusieurs mémoires (2004), dans lequel la ou les mémoires (2004) sont couplées au ou aux processeurs (2002), et la ou les mémoires (2004) sont configurées pour stocker un code de programme informatique (2005), dans lequel le code de programme informatique (2005) comprend des instructions informatiques, et lorsque le ou les processeurs (2002) exécutent les instructions informatiques, le dispositif électronique effectue le procédé d'enregistrement vidéo selon l'une quelconque des revendications 1 à 7.

9. Support de stockage lisible par ordinateur comprenant des instructions qui, lorsqu'elles sont exécutées par un dispositif électronique comprenant une caméra (2003) et une unité d'affichage (2001),
amènent le dispositif électronique à mettre en œuvre le procédé selon l'une quelconque des revendications 1 à 7.

10. Produit-programme informatique comprenant des instructions qui, lorsque le programme est exécuté par un dispositif électronique comprenant une caméra (2003) et une unité d'affichage (2001),
amènent le dispositif électronique à mettre en œuvre le procédé selon l'une quelconque des revendications 1 à 7.

11. Système à puce, dans lequel le système à puce est utilisé dans un dispositif électronique selon la revendication 8, dans lequel le système à puce comprend un ou plusieurs circuits d'interface et un ou plusieurs processeurs, le circuit d'interface et le processeur sont interconnectés par l'intermédiaire d'une ligne, le circuit d'interface est configuré pour recevoir un signal provenant d'une mémoire du dispositif électronique, et pour envoyer le signal au processeur, le signal comporte des instructions informatiques stockées dans la mémoire, dans lequel, lorsque le processeur exécute les instructions informatiques, le dispositif électronique est activé pour effectuer le procédé d'enregistrement vidéo selon l'une quelconque des revendications 1 à 7.
